# EUROPEAN PATENT APPLICATION

(11) **EP 4 585 600 A1**
(43) Date of publication of application: **16.07.2025**
(21) Application number: 24386094.7
(22) Date of filing: 07.08.2024
(51) Int. Cl.: C07F 15/02, B01D 53/62, B01J 31/16, B82Y 40/00

(54) **RETICULAR DESIGN AND DEVELOPMENT OF HIGHLY POROUS METAL-ORGANIC FRAMEWORKS FOR GAS AND VAPOR SORPTION APPLICATIONS**

(30) Priority: 08.08.2023 GR 20230100658
(71) Applicant: Special Account for Research Funds of University of Crete (SARF UoC), 74150 Rethimnon (GR)
(72) Inventor: Trikalitis, Pantelis, 70013 Heraklion Crete (GR); Froudas, Konstantinos, 70013 Heraklion Crete (GR); Vassaki, Maria, 70013 Heraklion Crete (GR); Tsangarakis, Constantinos, 70013 Heraklion Crete (GR); Papadopoulos, Konstantinos, 70013 Heraklion Crete (GR)

(57) **Abstract**

A porous metal organic framework (MOF) comprises building blocks, which may be formed with the combination of a) 4-connected (4-c) rectangular organic ligands, b) 3-connected (3-c) trigonal ligands and c) 6-connected (6-c) trigonal prismatic (e.g. M₃O(-COO)₆) or a trigonal antiprismatic (e.g. hexanuclear Zr, Hf or lanthanide clusters) or a combination of these inorganic secondary building units. The MOFs have potential for numerous applications. For example, the remarkable high and hierarchical porosity of materials based on Fe makes them ideal materials for advanced gas and vapor sorption applications, including hydrogen, methane and water, among others.

## Description

The invention refers to reticular design and development of novel, highly porous metal-organic frameworks for advanced gas and vapor sorption related applications.

Metal-organic frameworks (MOFs) represent an important class of functional porous materials made of the combination of inorganic building blocks and organic building blocks (ligands), linked together by coordination bonds. The use of diverse inorganic and organic components has led to the discovery of crystalline MOFs with exceptional porosities in terms of BET surface area and pore volume as well as framework functionalities originating from ligand modifications and for these reasons MOFs are highly suitable for important applications including gas storage/separation and catalysis, among other. In particular, MOFs are considered as key materials for hydrogen storage applications which currently represent a major obstacle towards a hydrogen-powered transportation sector. Furthermore, MOFs are also very important for methane storage as well as for CO₂ capture and storage as well as other important gas and vapor energy intense separation applications.

An important development in this field towards the rational design of advanced MOFs is the reticular chemistry approach, based on which both inorganic and organic building blocks are considered as well defined geometric shapes (nodes) with a particular connectivity. Accordingly, the MOF framework is represented by a net made of at least two different nodes. The particular geometric characteristics of these nodes and their connectivity, defined as the number of connections and their relative arrangement, determines the so-called net topology. The reticular chemistry structure resource (RCSR, http://rcsr.anu.edu.au/) contains a large collection of existing and hypothetical nets based on particular building blocks.

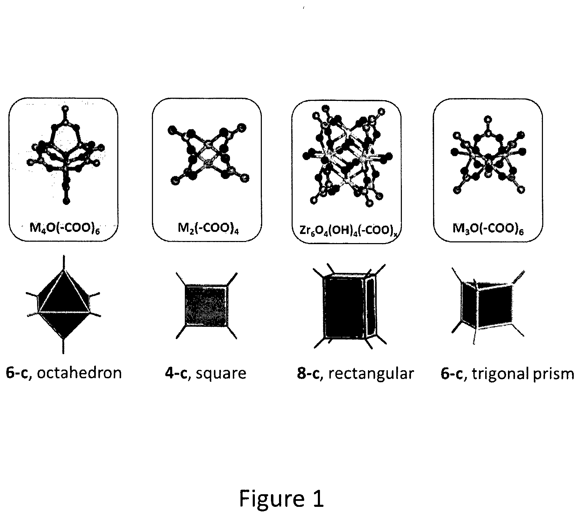

In RCSR, the edge-transitive (one kind of edge) binodal nets with different topologies, represent an important selection because many of these can be targeted experimentally following a high level of design. Accordingly, inorganic chemistry offers well-defined metal-based clusters in terms of geometry and connectivity that could be combined with organic ligands of suitable geometric shape and linking topology, to readily afford a desired structure. Representative examples of well-known inorganic clusters used in the reticular synthesis of MOFs are shown in Figure 1.

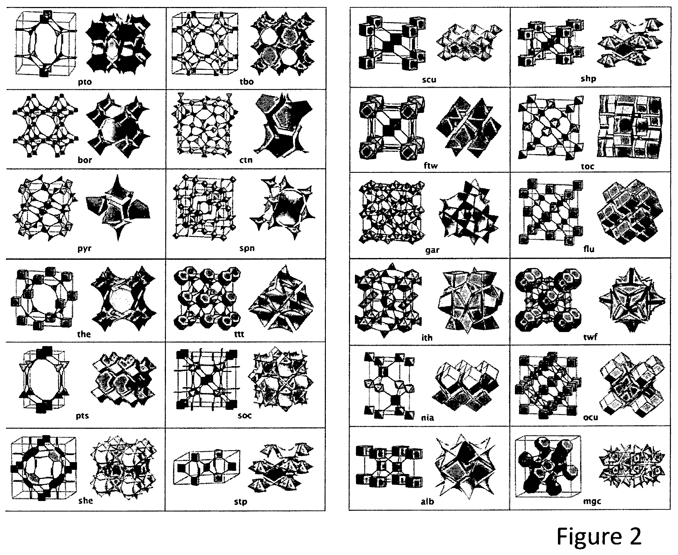

The representative inorganic clusters shown in Figure 1, are called secondary building units (SBUs) because these are formed in-situ during particular reaction conditions. Therefore, for the successful implementation of reticular chemistry it is important to identify the synthetic conditions that afford the desired SBUs to be formed. On the other hand, the organic ligand is considered to an extent as a true building block because it structure is known and usually retains its integrity during MOFs synthesis. Organic chemistry offers an unlimited number of ligands that can be synthesized and used in MOF reticular synthesis. A selection of important edge-transitive nets that are the focus of intense research worldwide towards the development of the corresponding MOFs is shown in Figure 2.

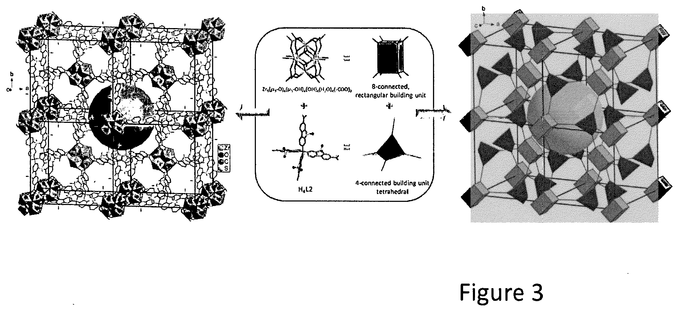

For example, the reticular synthesis of MOFs with **flu** (fluorite type structure) topology is possible by selecting a tetrahedral carboxylate organic ligand and Zr⁴⁺ cations. The latter forms in-situ 8-connected hexanuclear clusters which are suitable for the **flu**-type net (Figure 3).

To further expand the reticular chemistry repertoire in MOFs, it is important to identify building blocks their assembly of which can result in new structures. The object of the invention is a synthetic methodology that systematically affords highly porous and robust MOFs with tunable structures, displaying ultrahigh porosities suitable for advanced applications in the field of gas and vapor storage, among other. A further object of the invention is the use of building blocks that allows access to novel MOFs with unique properties.

The novel building blocks may be formed with the combination of a) 4-connected (4-c) rectangular organic ligands (abbreviation: **L4** ligand), b) 3-connected (3-c) trigonal ligands (abbreviation: **L3** ligand) and c) 6-connected (6-c) trigonal prismatic (e.g. M₃O(-COO)₆) or a trigonal antiprismatic (e.g. hexanuclear Zr, Hf or lanthanide clusters) or a combination of these inorganic SBUs. Detailed examples are provided below.

Because the resulting unit consists of three distinct components, a) the metal clusters, e.g. M₃O(-COO)₆, M₆O₄(OH)₄(-COO)₆, M₆(OH)₈(-COO)₆, and other b) the ligand L3 and c) the ligand L4, the unit is called a tertiary building block and denoted as **tbb.**

A building block for the construction of new, highly porous metal organic frameworks (MOF) comprises
a) two tridentate trigonal-shaped organic ligands, **L3,** each with three carboxylate groups coordinate to the metal clusters and
b) three tetradentate, rectangular planar organic ligands, **L4,** each with four carboxylate groups coordinate to the metal clusters
c) six oxo-centered trimeric carboxylate-based metal clusters, M₃O(-COO)₆, each with six points of extension, where M is a metal
   whereby
d) the three points of extension of each metal cluster are occupied by three carboxylate groups provided by one tridentate trigonal-shaped organic ligand, and two tetradentate, rectangular planar organic ligands, and the other three points of extension of each metal cluster are adapted to receive carboxylate groups by other sources of the MOF
e) the six (6) oxo-centered trimeric carboxylate-based metal clusters form two sets of three M₃O(-COO)₅
f) in each set three M₃O(-COO)₆ clusters are connected by one tridentate **L3** ligand
g) the two sets of metal clusters are connected by three tetradentate **L4** ligands in a trigonal prismatic arrangement (eclipsed conformation)
h) the unit has a trigonal prismatic shape in which each of the six corners is occupied by a M₃O(-COO)₆ cluster.

A method of production of *porous metal organic framework* includes,
a) providing the following precursors :
   - a cation metal salt *of a trivalent metal (3+ oxidation state)* within a range 20-80% of molar percentage
   - a protonated tridentate, carboxylate-based trigonal-shaped organic ligand (H₃**L3)** within a range 1-50% of molar percentage
   - a protonated tetradentate, carboxylate-based rectangular planar organic ligand (H₄**L4**) within a range of 1-50% of molar percentage
b) dissolving the precursors in a solvent to obtain a mixture
c) heating the mixture at a temperature that is equal or higher than 60 °C
d) obtaining the metal organic framework in microcrystalline powder form or as single crystals or a mixture of them.

Heating duration depends on the temperature and may vary from hours to days. The amount of MOF obtained is also dependent on the time that the mixture is heated at the selected temperature. In some examples the mixture was heated for 3 days at 135 °C.

The method yields the MOF with the oxo-centered trimeric carboxylate-based metal clusters, M₃O(-COO)₆, the tridentate trigonal-shaped organic ligands, **L3,** and the tetradentate, rectangular planar organic ligands, **L4.**

The metal M in the building block may be trivalent with 3+ oxidation state and is one of the following: include aluminum, scandium, titanium, vanadium, chromium, manganese, iron, cobalt, nickel, copper, gallium, germanium, arsenic, yttrium, zirconium, niobium, molybdenum, palladium, silver, indium, tin, antimony, lanthanum, cerium, praseodymium, neodymium, samarium, europium, gadolinium, terbium, dysprosium, holmium, erbium, thulium, ytterbium, lutetium, Hafnium, tantalum, tungsten, rhenium, osmium, iridium, platinum, gold, lead and bismuth, preferably one of aluminum, scandium, iron, gallium and indium.

The protonated tridentate carboxylate-based trigonal-shaped organic ligand (H₃L3) may be any of the following (name and corresponding formula given below):
i) **H₃L3,** i.e. 4,4',4"-(pyridine-2,4,6-triyl)tribenzoic acid: 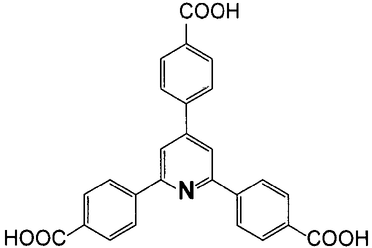
ii) H₃L3a, i.e. 5'-(4-carboxyphenyl)-[1,1':3',1"-terphenyl]-4,4"-dicarboxylic acid: 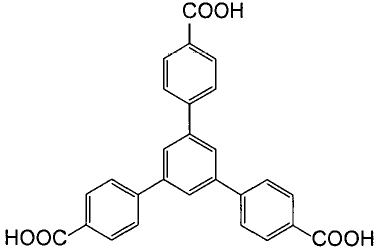
iii) H₃L3b, i.e. 4,4',4"-(1,3,5-triazine-2,4,6-triyl)tribenzoic acid: 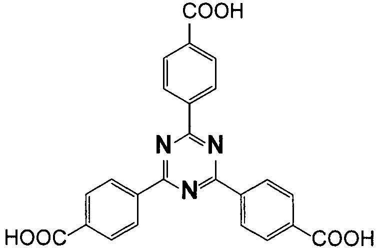
iv) **H₃L3c,** i.e. 5"-(4'-carboxy-[1,1'-biphenyl]-4-yl)-[1,1':4',1":3",1"':4‴,1ʺʺ-quinquephenyl]-4,4""-dicarboxylic acid: 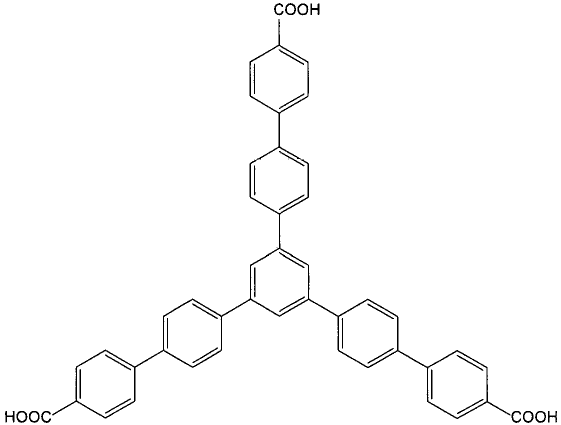
v) **H₃L3d,** i.e. 4,4',4"-nitrilotribenzoic acid: 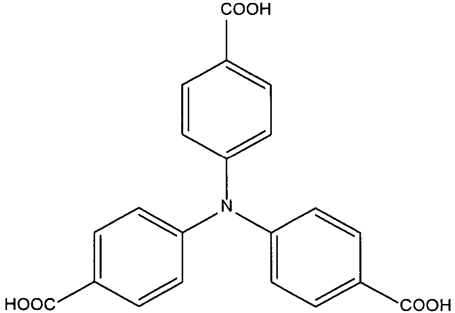
vi) **H₃L3e,** i.e. benzene-1,3,5-tricarboxylic acid:

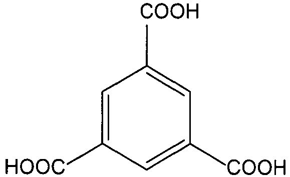

The protonated tetradentate, carboxylate-based rectangular planar organic ligand (H₄L4) may be any of the following (name and corresponding formula given below):
i) **H₄L4,** i.e. 4,4',4",4‴-(1,4-phenylenebis(pyridine-4,2,6-triyl))tetrabenzoic acid: 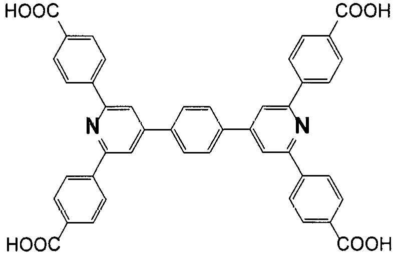
ii) **H₄L4-1,** i.e. 5',5‴-bis(4-carboxyphenyl)-[1,1':3',1'':4",1‴:3‴,1ʺʺ-quinquephenyl]-4,4ʺʺ-dicarboxylic acid: 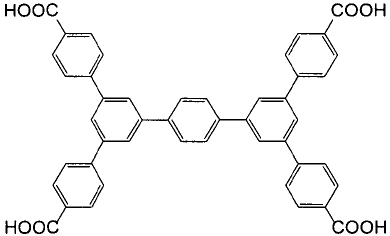
iii) **H₄L4-2,** i.e. 4,4',4",4‴-(naphthalene-2,6-diylbis(pyridine-4,2,6-triyl))tetrabenzoic acid: 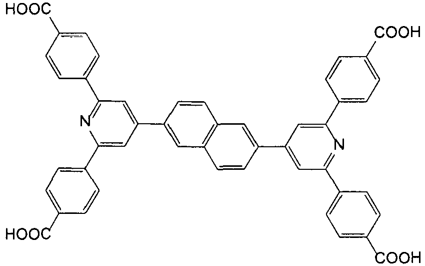
iv) **H₄L4-3,** i.e. 5',5ʺʺ-(naphthalene-2,6-diyl)bis(([1,1':3',1"-terphenyl]-4,4"-dicarboxylic acid)): 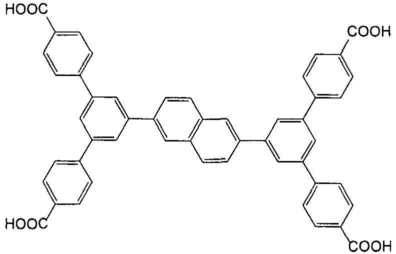
v) **H₄L4-4,** i.e. 4,4',4",4‴-(naphthalene-1,4-diylbis(pyridine-4,2,6-triyl))tetrabenzoic acid)): 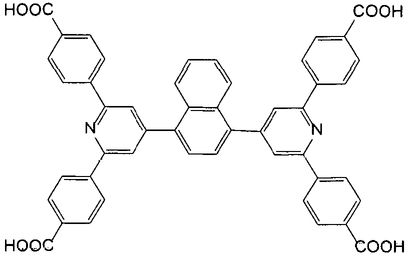
vi) **H₄L4-5,** i.e. 5',5ʺʺ-(naphthalene-1,4-diyl)bis(([1,1':3',1"-terphenyl]-4,4"-dicarboxylic acid)): 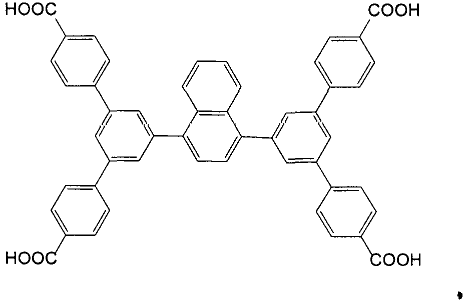
vii) **H₄L4-6,** i.e. 4',4‴,4‴ʺ,4‴ʺʺ-(1,4-phenylenebis(pyridine-4,2,6-triyl))tetrakis(([1,1'-biphenyl]-4-carboxylic acid)): 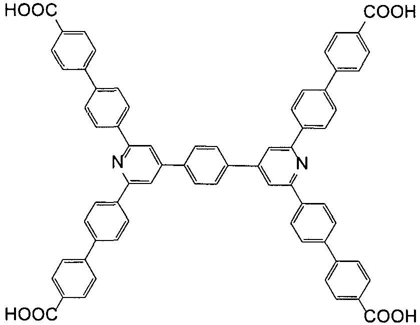
viii) **H₄L4-7,** i.e. 5",5‴ʺʺ-(1,4-phenylene)bis(([1,1':4',1":3",1‴:4‴,1ʺʺ-quinquephenyl]-4,4ʺʺ-dicarboxylic acid)): 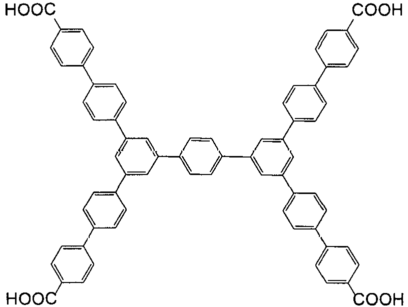
ix) **H₄L4-8,** i.e. 4',4‴,4‴ʺ,4‴ʺʺ-(naphthalene-1,4-diylbis(pyridine-4,2,6-triyl))tetrakis(([1,1'-biphenyl]-4-carboxylic acid)): 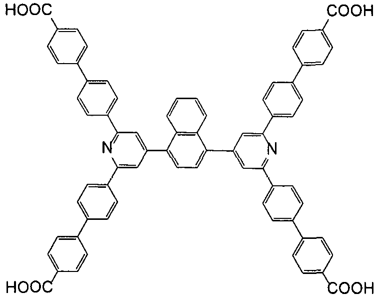
x) **H₄L4-9,** i.e. 5",5‴ʺʺ-(naphthalene-1,4-diyl)bis(([1,1':4',1":3",1‴:4‴,1ʺʺ-quinquephenyl]-4,4ʺʺ-dicarboxylic acid)): 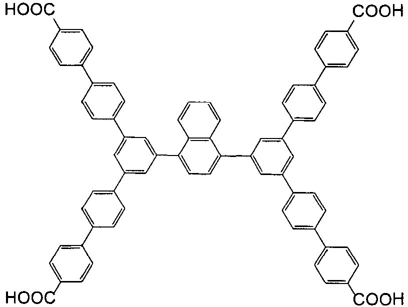
xi) **H₄L4-10,** i.e. 4',4‴,4‴ʺ,4‴ʺʺ-(naphthalene-2,6-diylbis(pyridine-4,2,6-triyl))tetrakis(([1,1'-biphenyl]-4-carboxylic acid)): 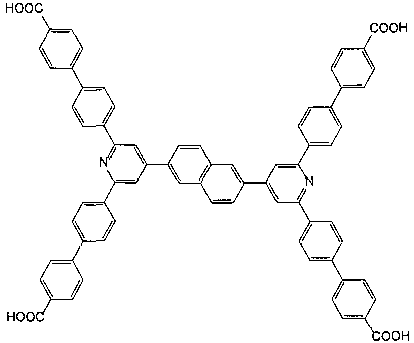
xii) **H₄L4-11,** i.e. 5",5‴ʺʺ-(naphthalene-2,6-diyl)bis(([1,1':4',1":3",1‴:4‴,1ʺʺ-quinquephenyl]-4,4ʺʺ-dicarboxylic acid)): 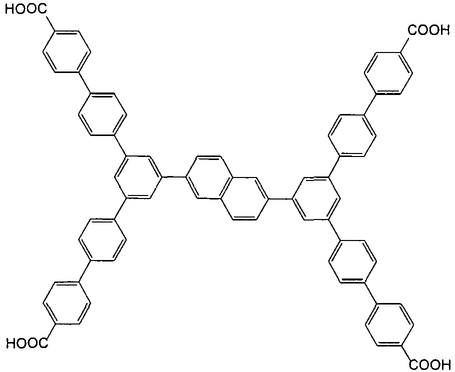
xiii) **H₄L4-12,** i.e. 4',4‴,4‴ʺ,4‴ʺʺ-([1,1'-biphenyl]-4,4'-diylbis(pyridine-4,2,6-triyl))tetrakis(([1,1'-biphenyl]-4-carboxylic acid)) **(H₄L4-12):** 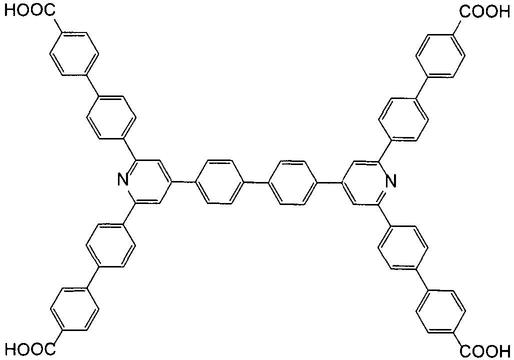
xiv) **H₄L4-13,** i.e. 4-[4-[3-[4-[4-[3,5-bis[4-(4-carboxyphenyl)phenyl]phenyl]phenyl]phenyl]-5-[4-(4-carboxyphenyl)phenyl]phenyl]phenyl]benzoic acid **(H₄L4-13):** 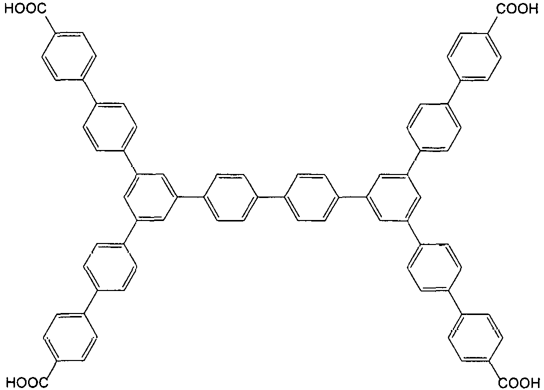
xv) **H₄L4-14,** i.e. 4,4',4",4‴-(1,4-phenylenebis(azanetriyl))tetrabenzoic acid **(H₄L4-14):** 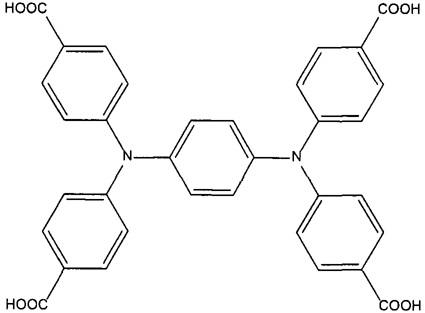
vxi) **H₄L4-15,** i.e. is (E)-5,5'-(diazene-1,2-diyl)diisophthalic acid **(H₄L4-15):** 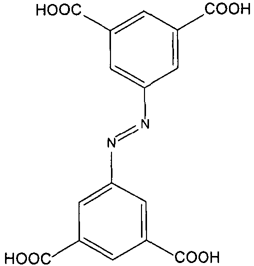
xvii) **H₄L4-16,** i.e. [1,1'-biphenyl]-3,3',5,5'-tetracarboxylic acid **(H₄L4-16):** 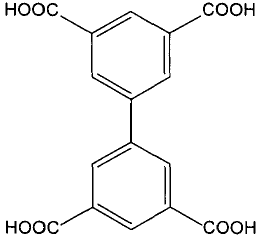
xviii) **H₄L4-17,** i.e. is [1,1':4',1"-terphenyl]-3,3",5,5"-tetracarboxylic acid **(H₄L4-17):**

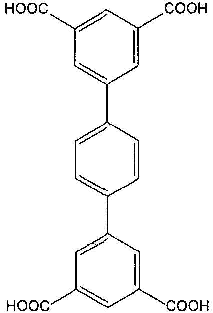

The ligands of the building block may be obtained from various combinations of **H₃L3** and **H₄L4** ligand precursors. Examples of such combinations are:
- **H₃L3/H₄L4, H₃L3/H₄L4-1, H₃L3/H₄L4-2, H₃L3/H₄L4-3, H₃L3/H₄L4-4, H₃L3/H₄L4-5**
- **H₃L3a/H₄L4, H₃L3a/H₄L4-1, H₃L3a/H₄L4-2, H₃L3a/H₄L4-3, H₃L3a/H₄L4-4, H₃L3a/H₄L4-5**
- **H₃L3b/H₄L4, H₃L3b/H₄L4-1, H₃L3b/H₄L4-2, H₃L3b/H₄L4-3, H₃L3b/H₄L4-4, H₃L3b/H₄L4-5**
- **H₃L3c/H₄L4-6, H₃L3c/H₄L4-7, H₃L3c/H₄L4-8, H₃L3c/H₄L4-9, H₃L3c/H₄L4-10, H₃L3c/H₄L4-11, H₃L3c/H₄L4-12, H₃L3c/H₄L4-13**
- **H₃L3d/H₄L4-14**
- **H₃L3e/H₄L4-15, H₃L3e/H₄L4-16, H₃L3e/H₄L4-17**

Preferable combinations are the following: **H₃L3/H₄L4, H₃L3/H₄L4-1, H₃L3a/H₄L4, H₃L3a/H₄L4-1, H₃L3b/H₄L4, H₃L3b/H₄L4-1**

Some examples building blocks have trigonal anti-prismatic hexanuclear metal clusters **M₆O₄(OH)₄(-COO)₆** , where M: Zr⁴⁺, Hf⁴⁺ or **M₆(OH)₈(-COO)₆,** where M: Y³⁺, La³⁺, Ce³⁺, Pr³⁺, Nd³⁺, SM³⁺, Eu³⁺/Eu²⁺, Gd³⁺, Tb³⁺, Dy³⁺, Ho³⁺, Er³⁺, Tm³⁺, Yb³⁺, Lu³⁺.

A porous metal organic framework (MOF), according to the invention may have a framework formula: (M₃O)₇(**L4**)₉(**L3**)₂X₇Y_{z}, with z≥21, where M is a metal provided by a metal salt precursor and X is the anion of the metal salt precursor and Y is a solvent molecule

Alternatively, the **tbb** units based on M₃O(-COO)₆ or M₆O₄(OH)₄(-COO)₆ or M₆(OH)₈(-COO)₆ metal clusters may be linked together through their corners using suitable organic linkers **(L5),** resulting in novel MOFs displaying the **acs** topology. The topology is denoted as M-**acs**-MOF-z (Z= 1, 2, 3,...), where in the case of M-**acs**-MOF-1 have a charge balanced framework formula (M₃O)₆**(L4)**₃**(L3)**₂**(L5)**₉X₆Y_{Z}, where X is the anion of the metal salt precursor and Y are solvent molecules with z≥18.

Examples of formulae of such metal organic frameworks (MOF) are:
- (M₃O)₆(**L4)**₃(**L3**)₂(**L5**)₉X₆Y_{z}, with z≥18 or
- [M₆O₄(OH)₄T₆]₆(**L3**)₂(**L4**)₃(**L5**)₉
- [M₆(OH)₈T₆]₆(**L3**)₂(**L4**)₃(**L5**)₉X₁₂
where
- **L5** is a bend ligand
- T is OH- or non-bridging carboxylate-based organic ligand
- M is a metal provided by a metal salt precursor and X is a monovalent (-1 charge) anion of the metal salt precursor.

Ligand **L5** is a bidentate ligand, preferably a bend dicarboxylate ligand from a ligand precursor that may be any of the following (name and corresponding formula given below):
i) **H₂L5-1,** i.e. 2,2"-dimethyl-[1,1':3',1"-terphenyl]-4,4"-dicarboxylic acid 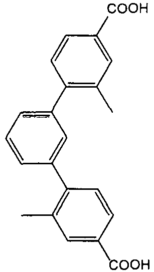
ii) **H₂L5-2,** i.e. 2,2",6,6"-tetramethyl-[1,1':3',1"-terphenyl]-4,4"-dicarboxylic acid 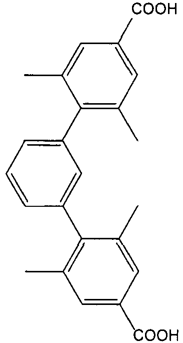
iii) **H₃L5-3,** i.e. a 4,4'-sulfonyldibenzoic acid 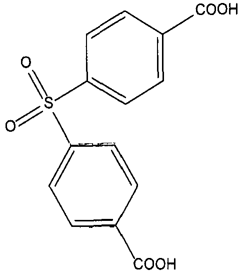
iv) **H₂L5-4,** i.e. 4,4'-Methylenedibenzoic acid **(H₂L5-4)** 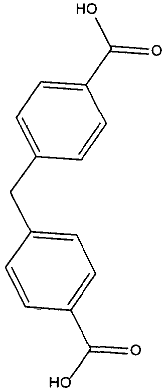
v) is 4,4'-(difluoromethylene)dibenzoic acid **(HzL5-5)**

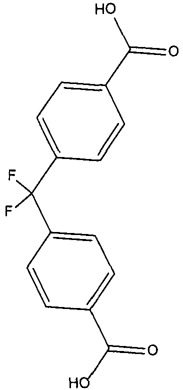

The ligands of building blocks with **L3, L4 and L5** ligands may be obtained from various combinations of **H₃L3** and **H₄L4** ligand precursors **H₃L3.** Examples of such combinations are:
- **H₃L3/H₄L4/H₂L5-1, H₃L3/H₄L4-1/H₂L5-1, H₃L3/H₄L4-2/H₂L5-1, H₃L3/H₄L4-3/H₂L5-1, H₃L3/H₄L4-4/H₂L5-1, H₃L3/H₄L4-5/H₂L5-1**
- **H₃L3/H₄L4/H₂L5-2, H₃L3/H₄L4-1/H₂L₅-2, H₃L3/H₄L4-2/H₂L5-2, H₃L3/H₄L4-3/H₂L5-2, H₃L3/H₄L4-4/H₂L5-2, H₃L3/H₄L4-5/H₂L5-2**
- **H₃L3/H₄L4/H₂L5-3, H₃L3/H₄L4-1/H₂L5-3, H₃L3/H₄L4-2/H₂L5-3, H₃L3/H₄L4-3/H₂L5-3, H₃L3/H₄L4-4/H₂L5-3, H₃L3/H₄L4-5/H₂L5-3**
- **H₃L3/H₄L4/H₂L5-4, H₃L3/H₄L4-1/H₂L5-4, H₃L3/H₄L4-2/H₂L5-4, H₃L3/H₄L4-3/H₂L5-4, H₃L3/H₄L4-4/H₂L5-4, H₃L3/H₄L4-5/H₂L5-4**
- **H₃L3/H₄L4/H₂L5-5, H₃L3/H₄L4-1/H₂L5-5, H₃L3/H₄L4-2/H₂L5-5, H₃L3/H₄L4-3/H₂L5-5, H₃L3/H₄L4-4/H₂L5-5, H₃L3/H₄L4-5/H₂L5-5**
- **H₃L3a/H₄L4/H₂L5-1, H₃L3a/H₄L4-1/H₂L5-1, H₃L3a/H₄L4-2/H₂L5-1, H₃L3a/H₄L4-3/H₂L5-1, H₃L3a/H₄L4-4/H₂L5-1, H₃L3a/H₄L4-5/H₂L5-1**
- **H₃L3a/H₄L4/H₂L5-2, H₃L3a/H₄L4-1/H₂L5-2, H₃L3a/H₄L4-2/H₂L5-2, H₃L3a/H₄L4-3/H₂L5-2, H₃L3a/H₄L4-4/H₂L5-2, H₃L3a/H₄L4-5/H₂L5-2**
- **H₃L3a/H₄L4/H₂L5-3, H₃L3a/H₄L4-1/H₂L5-3, H₃L3a/H₄L4-2/H₂L5-3, H₃L3a/H₄L4-3/H₂L5-3, H₃L3a/H₄L4-4/H₂L5-3, H₃L3a/H₄L4-5/H₂L5-3**
- **H₃L3a/H₄L4/H₂L5-4, H₃L3a/H₄L4-1/H₂L5-4, H₃L3a/H₄L4-2/H₂LS-4, H₃L3a/H₄L4-3/H₂L5-4, H₃L3a/H₄L4-4/H₂L5-4, H₃L3a/H₄L4-5/H₂L5-4**
- **H₃L3a/H₄L4/H₂L5-5, H₃L3a/H₄L4-1/H₂L5-5, H₃L3a/H₄L4-2/H₂L5-5, H₃L3a/H₄L4-3/H₂L5-5, H₃L3a/H₄L4-4/H₂L5-5, H₃L3a/H₄L4-5/H₂L5-5**
- **H₃L3b/H₄L4/H₂L5-1, H₃L3b/H₄L4-1/H₂L5-1, H₃L3b/H₄L4-2/H₂L5-1, H₃L3b/H₄L4-3/H₂L5-1, H₃L3b/H₄L4-4/H₂L5-1, H₃L3b/H₄L4-5/H₂L5-1**
- **H₃L3b/H₄L4/H₂L5-2, H₃L3b/H₄L4-1/H₂L5-2, H₃L3b/H₄L4-2/H₂L5-2, H₃L3b/H₄L4-3/H₂L5-2, H₃L3b/H₄L4-4/H₂L5-2, H₃L3b/H₄L4-5/H₂L5-2**
- **H₃L3b/H₄L4/H₂L5-3, H₃L3b/H₄L4-1/H₂L5-3, H₃L3b/H₄L4-2/H₂L5-3, H₃L3b/H₄L4-3/H₂L5-3, H₃L3b/H₄L4-4/H₂L5-3, H₃L3b/H₄L4-5/H₂L5-3**
- **H₃L3b/H₄L4/H₂L5-4, H₃L3b/H₄L4-1/H₂L5-4, H₃L3b/H₄L4-2/H₂L5-4, H₃L3b/H₄L4-3/H₂L5-4, H₃L3b/H₄L4-4/H₂L5-4, H₃L3b/H₄L4-5/H₂L5-4**
- **H₃L3b/H₄L4/H₂L5-5, H₃L3b/H₄L4-1/H₂L5-5, H₃L3b/H₄L4-2/H₂L5-5, H₃L3b/H₄L4-3/H₂L5-5, H₃L3b/H₄L4-4/H₂L5-5, H₃L3b/H₄L4-5/H₂L5-5**
- **H₃L3c/H₄L4-6/H₂L5-1, H₃L3c/H₄L4-7/H₂L5-1, H₃L3c/H₄L4-8/H₂L5-1, H₃L3c/H₄L4-9/H₂L5-1, H₃L3c/H₄L4-10/H₂L5-1, H₃L3c/H₄L4-11/H₃L5-1, H₃L3c/H₄L4-12/H₂L5-1, H₃L3c/H₄L4-13/H₂L5-1**
- **H₃L3c/H₄L4-6/H₂L5-2, H₃L3c/H₄L4-7/H₂L5-2, H₃L₃c/H₄L4-8/H₂L5-2, H₃L3c/H₄L4-9/H₂L5-2, H₃L3c/H₄L4-10/H₂L5-2, H₃L3c/H₄L4-11/H₂L5-2, H₃L3c/H₄L4-12/H₂L5-2, H₃L3c/H₄L4-13/H₂L5-2**
- **H₃L3c/H₄L4-6/H₂L5-3, H₃L3c/H₄L4-7/H₂L5-3, H₃L3c/H₄L4-8/H₂L5-3, H₃L3c/H₄L4-9/H₂L5-3, H₃L3c/H₄L4-10/H₂L5-3, H₃L3c/H₄L4-11/H₂L5-3, H₃L3c/H₄L4-12/H₂L5-3, H₃L3c/H₄L4-13/H₂L5-3**
- **H₃L3c/H₄L4-6/H₂L5-4, H₃L3c/H₄L4-7/H₂L5-4, H₃L3c/H₄L4-8/H₂L5-4, H₃L3c/H₄L4-9/H₂L5-4, H₃L3c/H₄L4-10/H₂L5-4, H₃L3c/H₄L4-11/H₂L5-4, H₃L3c/H₄L4-12/H₂L5-4, H₃L3c/H₄L4-13/H₂L5-4**
- **H₃L3c/H₄L4-6/H₂L5-5, H₃L3c/H₄L4-7/H₂L5-5, H₃L3c/H₄L4-8/H₂L5-5, H₃L3c/H₄L4-9/H₂L5-5, H₃L3c/H₄L4-10/H₂L5-5, H₃L3c/H₄L4-11/H₂L5-5, H₃L3c/H₄L4-12/H₂L5-5, H₃L3c/H₄L4-13/H₂L5-5**
- **H₃L3d/H₄L4-14/H₂L5-1, H₃L3d/H₄L4-14/H₂L5-2, H₃L3d/H₄L4-14/H₂L5-3, H₃L3d/H₄L4-14/H₂L5-4, H₃L3d/H₄L4-14/H₂L5-5,**
- **H₃L3e/H₄L4-1S/H₂L5-1, H₃L3e/H₄L4-15/H₂L5-2, H₃L3e/H₄L4-15/H₂L5-3, H₃L3e/H₄L4-15/H₂L5-4, H₃L3e/H₄L4-15/H₂L5-5**
- **H₃L3e/H₄L4-16/H₂L5-1, H₃L3e/H₄L4-16/H₂L5-2, H₃L3e/H₄L4-16/H₂L5-3, H₃L3e/H₄L4-16/H₂L5-4, H₃L3e/H₄L4-16/H₂L5-5**
- **H₃L3e/H₄L4-17/H₂L5-1, H₃L3e/H₄L4-17/H₂L5-2, H₃L3e/H₄L4-17/H₂L5-3, H₃L3e/H₄L4-17/H₂L5-4, H₃L3e/H₄L4-17/H₂L5-5**

Preferable combinations are the following: **H₃L3/H₄L4/H₂L5-2, H₃L3/H₄L4-1/H₂L5-2, H₃L3a/H₄L4/H₂L5-2, H₃L3a/H₄L4-1/H₂L5-2, H₃L3b/H₄L4/H2L5-2, H₃L3b/H₄L4-1/H₃L5-2**

In another aspect of the invention the method of production of *porous metal organic framework* includes,
a) providing the following precursors:
   - a cation metal salt of a trivalent metal (3+ oxidation state) or a tetravalent (4+)within a range 20-80% of molar percentage
   - a protonated tridentate, carboxylate-based trigonal-shaped organic ligand (H₃**L3**) within a range 1-50% of molar percentage
   - a protonated tetradentate, carboxylate-based rectangular planar organic ligand (H₄**L4**) within a range of 1-50% of molar percentage
   - a protonated bend organic ligand (H₂**L5**) within a range of 1-50% of molar percentage
b) dissolving the precursors in a solvent to obtain a mixture
c) heating the mixture at a temperature that is equal or higher than 60 °C
d) obtaining the metal organic framework in microcrystalline powder form or as single crystals or a mixture of them

The methods of the invention may include adding to the mixture modulators, preferably acetic acid and/or benzoic acid and/or formic acid, to promote crystallinity.

The solvent in the methods may be an amide-based solvent such as N,N-Dimethyformamide (DMF) or N,N-Diethyformamide (DEF).

Heating the mixture may be effected at a temperature less than or equal with 180 °C.

Key points of novelty of the invention are:
a. New, highly porous structures based on novel tertiary building blocks **with high porosity**
b. Robust structurers based on highly acidic metal cations (e.g. Fe³⁺, Al³⁺, Cr³⁺) providing strong coordination bonds
c. Earth abundant metal cations
d. Facile, one pot synthesis
e. The organic ligands can be synthesized in large scale at low cost
f. The obtained **tbb** MOF platform is accessible with other earth abundant metals such as Mg, V, Cr, Mn, Fe, Co, Ni and Al, as well as Ga and In, that are known to form the oxo-trimeric metal carboxylate clusters (M₃O(-COO)_{g})
i. The **tbb** MOF platform is highly susceptible to isoreticular synthesis using suitable pairs of sorter or expanded 3-c and 4-c ligands (examples are provided below).
j. The **tbb** platform is susceptible to further modification (tunable properties) with functional group, using functionalized 3-c and 4-c ligands.
k. The **ttb** unit could be formed with metals that can display 6-connected trigonal antiprismatic geometry such as the Zr⁴⁺, Hf⁴⁺ and Lanthanides (Ln³⁺), providing access to novel MOFs with unprecedented structures and properties..

The **tbb** MOFs have potential for numerous applications. For example, the remarkable high and hierarchical porosity of materials based on Fe, i.e. Fe-**tbb**-MOF-x , makes them ideal materials for advanced gas and vapor sorption applications, including hydrogen, methane and water, among others.

Embodiments of the inventions are described below with reference to the following Figures:
**Figure 1** shows representative inorganic clusters with well-defined geometric shape and connectivity used in reticular synthesis of MOFs.
**Figure 2** shows representative edge-transitive binodal nets in MOFs.
**Figure 3** shows schematically an example of reticular synthesis of a sulfone-functionalized MOF with **flu** topology.
**Figure 4** shows examples of building blocks H₃**L3,** H₄**L4** and Fe₃O(-COO)₆ (top) used for the construction of the unique structure of Fe-**tbb**-MOF-1 (bottom). The dotted circle highlights the novel tertiary building block **(tbb),** seen from the top.
**Figure 5** shows an example of the novel 18-connected tertiary building block (**tbb**) with trigonal prismatic geometry (shape at the right) made of six (6) **Fe₃O(-COO)₆-a** clusters, three 4-connected **L4-a ligands** and two 3-connected **L3 ligands.**
**Figure 6** shows an example of the crystallographically independent **Fe₃O(-COO)₆-b** cluster coordinated by six **L4-b** ligands appeared in the structure of Fe-**tbb-**MOF-1.
**Figure 7** shows the 18-c building block shown in **Figure 6** connecting three 18-c **tbb's** arranged in a regular triangle and these triangles are placed in a staggered fashion along the c-axis, a) side view and b) top view.
**Figure 8** is an example of a 5-nodal **tbb** net associated with the structure of Fe-**tbb**-MOF-1 formed by the combination of Fe₃O(-COO)₆ trigonal prismatic building blocks, the trigonal 3-c and rectangular 4-c organic ligands.
**Figure 9** shows the structure of an example of Fe-**tbb**-MOF-1 highlighting the cages of different pore size (spheres)
**Figure 10** shows the discrete cages with hierarchical pore sizes observed in an example of a Fe-**tbb**-MOF-1
**Figure 11** shows the Argon sorption isotherm recorded at 87 K for Fe-**tbb**-MOF-1 , from which important parameters were calculated including BET surface area using consistency criteria, total pore volume and pore size distribution
**Figure 12** shows a) BET plot, b) DFT fitting comparison and c) DFT pore size distribution and cumulative pore volume of Fe-**tbb**-MOF-1 material
**Figure 13****.** Trigonal ligands used for the construction of novel **tbb** MOFs in combination with the 4-c H₄**L4** ligand.
**Figure 14** shows PXRD patterns of the isostructural of an example of a Fe-**tbb**-MOF-x (x = 1, 2, 3) MOFs
**Figure 15** shows representative SEM images of a microcrystalline Fe-**tbb**-MOF-1 batch used for Ar sorption measurements. Similar images are obtained for the isostructural MOFs
**Figure 16****.** shows optical images of examples of large single crystals of Fe-**tbb**-MOF-1 (a, b) and c) a 50x150x400 µm single crystal mounted on a Bruker D8 Venture goniometer using a MiTeGen microloop, for single crystal data collection
**Figure 17** shows examples of individual components suitable for the construction of the novel **tbb** unit
**Figure 18** shows an example of a construction of M-**acs**-MOF-1 structures (left) by linking **tbb** units through their corners using suitable bend bidentate organic ligands (bottom right)
**Figure 19** shows examples of hexanuclear trigonal anti-prismatic **M₆O₄(OH)₄(-COO)₆** or **M₆(OH)₈(-COO)₆** metal clusters that are suitable for the construction of novel trigonal prismatic **tbb** units

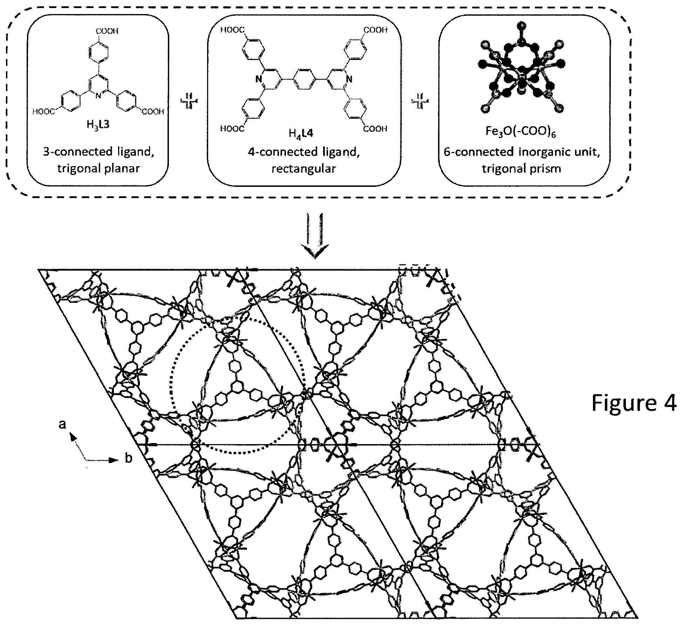

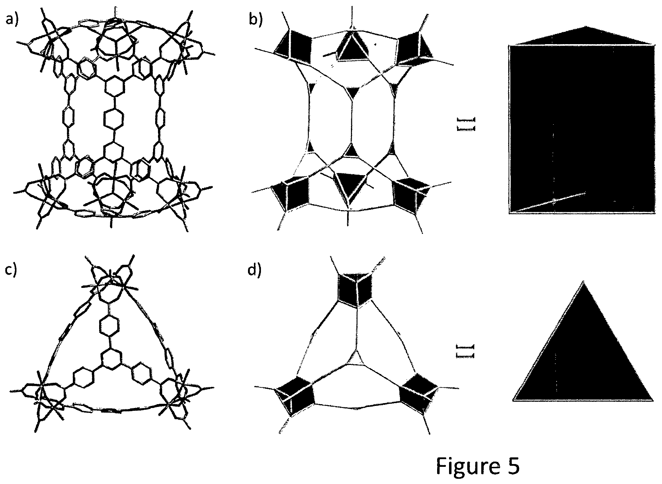

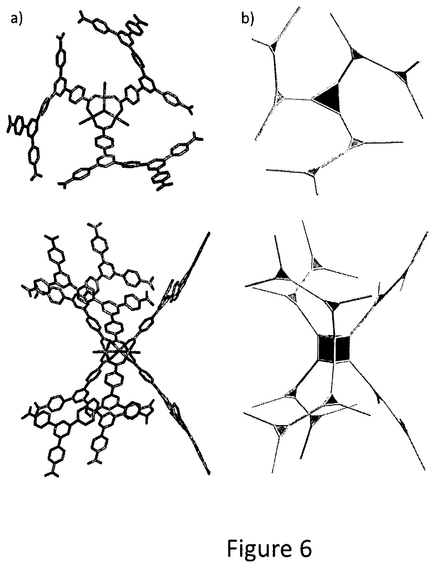

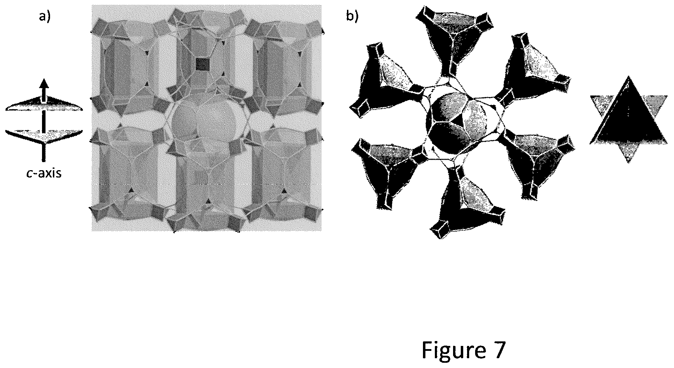

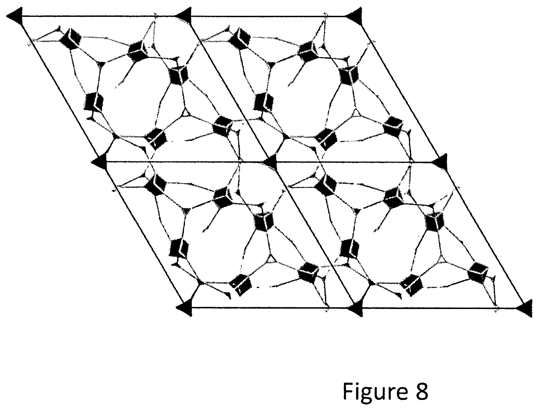

The novel material, denoted as Fe-**tbb**-MOF-1, was constructed using the 4-c rectangular ligand H₄**L4,** the 3-c trigonal ligand H₃**L3** and the 6-c µ_{3-OXO} centered trimeric iron carboxylate clusters Fe₃O(-COO)₆, shown in Figure 4-top and Figure 4-bottom. The material crystallizes in the hexagonal system, space group P-62c, with very large unit cell parameters, a = b = 420981 Å, c = 61.5509 Å, α = β = 90°, γ = 120°. The structure features two crystallographically distinct µ₃-oxo centered trimeric iron carboxylate clusters, Fe₃O(-COO)₆, denoted as **Fe₃O(-COO)₆-a** and **Fe₃O(-COO)₆-b,** two crystallographically distinct deprotonated **L4** ligands, denoted as **L4-a** and **L4-b** and a crystallographically unique deprotonated **L3** ligand. Each trimer is charged balanced by one NO₂⁻ anion which was found to be crystallographically disordered. Within a Fe₃O(-COO)₆ trimer, each trivalent Fe has an octahedral geometry with an apical position occupied by one solvent molecule (e.g. H₂O). *A novel tertiary trigonal prismatic building block is formed by the combination of six (6) **Fe₃O(-COO)₆-a** inorganic clusters, three (3) **L4-a** ligands and two (2) **L3** ligands, as shown in* *Figure 5**.* This tertiary building block **(tbb)** displays 18 points of extension (three in each corner), forming a unique 18-connected (18-c) **tbb.** These 18-c **tbb's** are connected together by a different 18-connected building block formed by one (1) **Fe₃O(-COO)₆**-**b** cluster and six (6) **L4-b** ligands (Figure 6). The latter 18-c building block connects three 18-c **tbb's** arranged in a regular triangle and these triangles are placed in a staggered fashion along the c-axis, as shown in Figure 7. The overall charged balanced chemical formula of Fe-**tbb-**MOF-1 is (Fe₃O)₇(L4)₉(L3)₂(NO₃)₇. Topological analysis using the software TOPOS Pro revealed the formation of a unique (3,4,4,6,6)-c 5-nodal net (Figure 8).

In particular **Figure 5** presents a) top-left: side view of the novel 18-connected tertiary building block **(tbb)** with trigonal prismatic geometry (shape at the right) made of six (6) **Fe₃O(-COO)₆-a** clusters, three 4-connected **L4-a ligands** and two 3-connected **L3 ligands** (top and below of the **tbb).** b) Geometric representation of the individual building blocks used for the assembly of the tertiary **tbb** unit. This representation is used for the topological analysis of the structure. The connectivity (linking points of extension) of the **tbb** unit is 18 (three in each corner). c) Top view of the novel **tbb** unit showing the 3-connected **L3** ligand. d) the corresponding view of the **tbb** unit in a geometric representation. The trigonal prismatic shape of the novel **ttb** building block is shown at the right of the image.

**Figure 6** shows the top view (a-top) and side view (a-bottom) of the crystallographically independent **Fe₃O(-COO)₆-b** cluster coordinated by six **L4-b** ligands and the geometric representation of the corresponding organic and inorganic building blocks, top view (b-top) and side view (b-bottom). This cluster contains 18 carboxylate groups and therefore is an 18-connected building block.

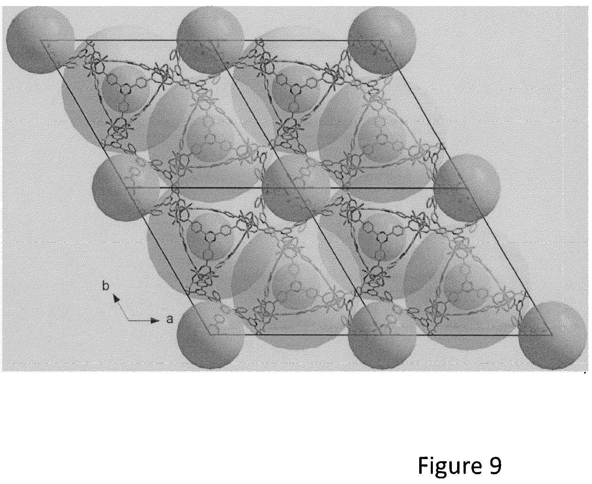

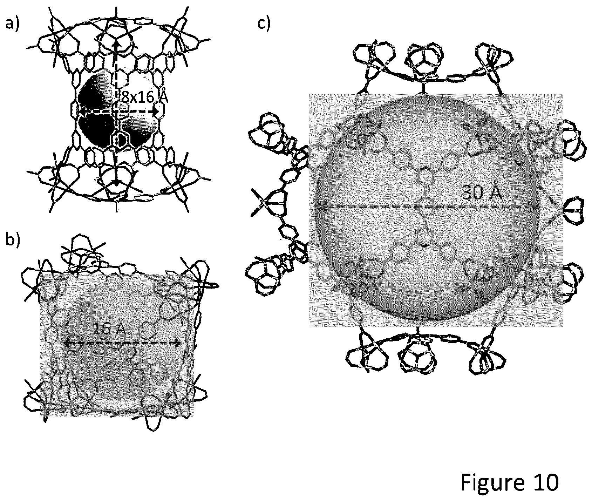

The resulting three-dimensional structure is exceptionally porous with a calculated solvent accessible volume by PLATON software, of 86% of the total unit cell volume. The structure features a unique hierarchical pore system (from small micropores to mesopores) made of interconnected cages with the smallest one displaying a size of 8x16 Å while the largest one shows a diameter in the mesopore range of ~30 Å (Figure 9 & Figure 10) and a distorted cube-like ultramicropore cages displaying a size of ~16 Å (Figure 10b) . This pore system was verified experimentally by accurate microporous analysis. Accordingly, the material was successfully activated by removing the solvent molecules residing in the pores, and its porosity was evaluated by recording a detailed Argon adsorption desorption isotherm at 87 K, which is the gold-standard method according to IUPAC.

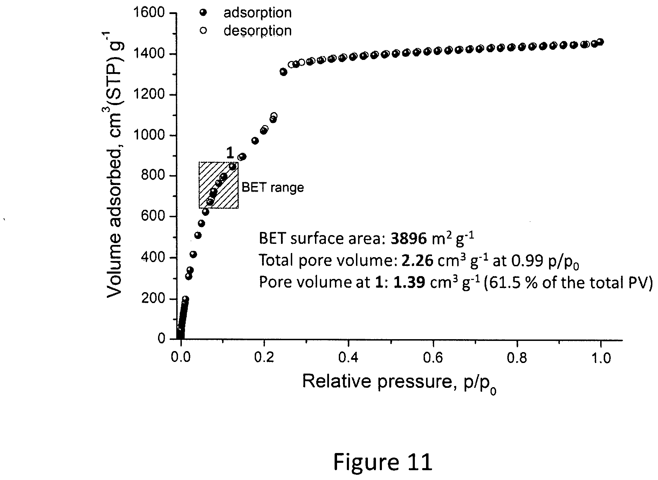

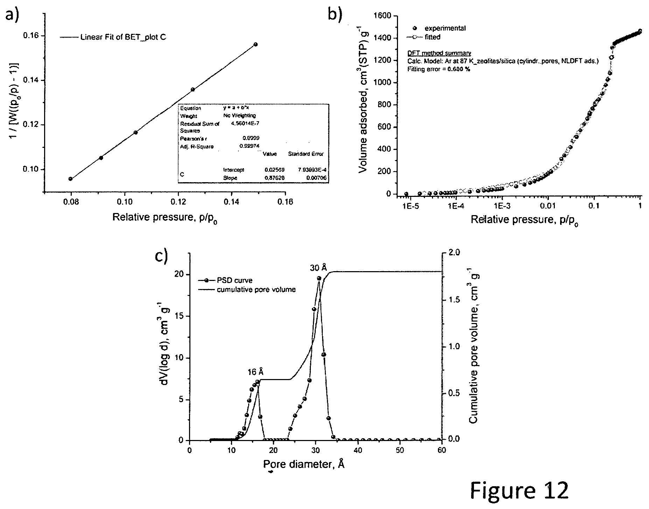

The corresponding Argon sorption isotherm is shown in Figure 11. From the isotherm it was possible to calculate parameters, including BET surface area using consistency criteria, total pore volume and pore size distribution. Accordingly, the experimentally determined BET surface area using consistency criteria is **3896** m² g⁻¹ with the total pore volume of **2.26** cm³ g⁻¹ at p/p0 0.99. The pore size distribution curve extracted by fitting the isotherm with an appropriate NLDFT kernel (Ar at 87K Zeolite/Silica (Cylindrical pores, NLDFT ads) show two well defined peaks centered at 16 Å and 30 Å (Figure 12). These results are in full agreement with the calculated data obtained from the single crystal structure.

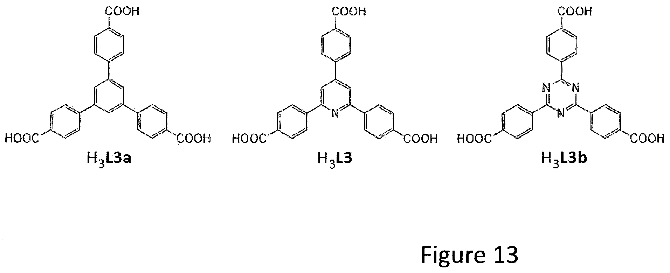

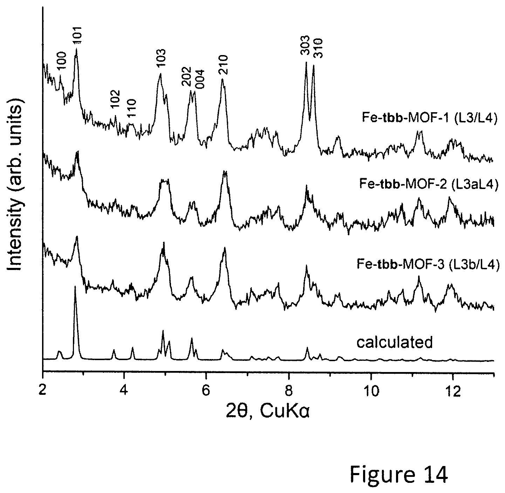

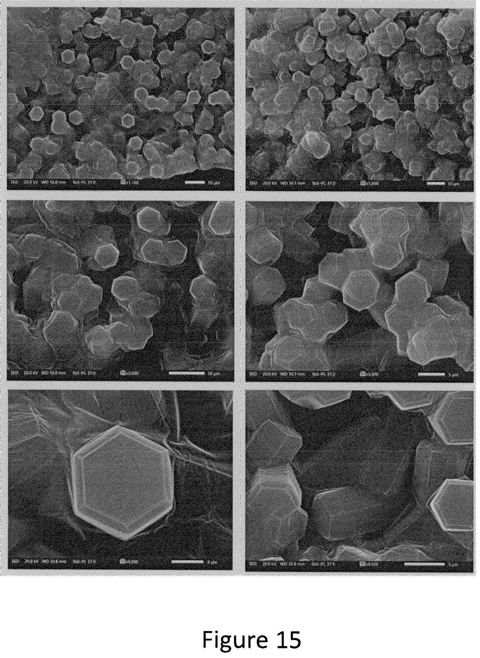

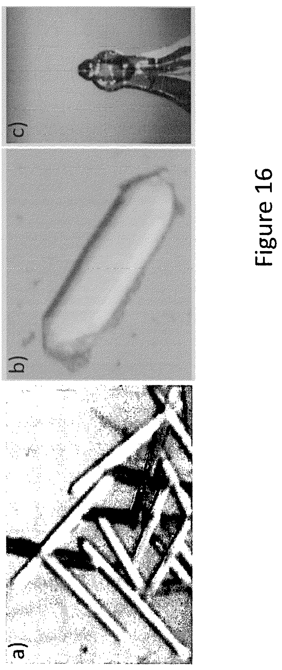

Isostructural compounds have been synthesized with different types of 3-c **L3**-type ligands and in particular with H₃**L3a** and H₃**L3b** (Figure 13) in combination with the 4-c ligand H₄**L4**. The corresponding MOFs denoted as Fe-**tbb**-MOF-2 and Fe-**tbb**-MOF-3, respectively. Powder X-ray diffraction data confirm that these materials are isostructural compounds (Figure 14). Representative scanning electron microscopy images of the Fe-**tbb**-MOF-1 batch used for Ar sorption and PXRD measurements are shown in Figure 15. Larger single crystals suitable for single-crystal X-ray diffraction analysis can be also obtained and shown in Figure 16.

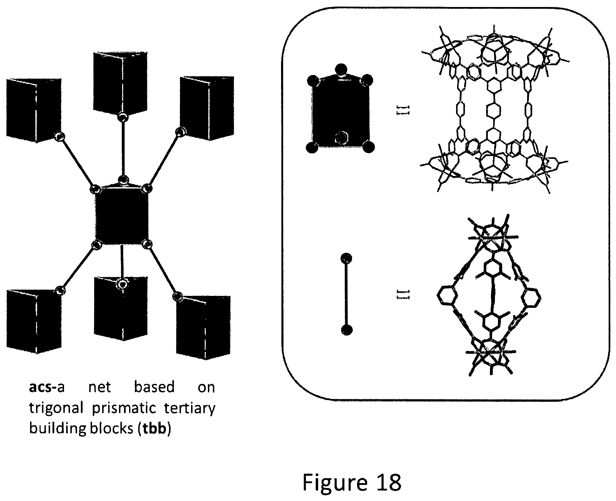

**Figure 18** shows the construction of M-**acs**-MOF-1 structures (left) by linking **tbb** units through their corners using suitable bend bidentate organic ligands (bottom right). In this particular example, the bend bidentate ligand is 2,2",6,6"-tetramethyl-[1,1':3',1"-terphenyl]-4,4"-dicarboxylic acid **(H₂L5-2).** The **acs**-a net of the Figure is based on triagonal prismatic building blocks **(tbb).**

An example of synthesis of a material according to the invention is given below. The material of the example is Fe-**tbb**-MOF-1. An amount of 10.1 mg (0.025 mmol) of Fe(NO₃)₃·9H2O , 6.4 mg (0.009 mmol) of H₄**L4,** 2.6 mg (0.006 mmol) of H₃**L3** and 0.25 ml of acetic acid were dissolved in a 20 ml glass scintillation vial containing 2 ml DMF. The vial was placed in an isothermal oven at 135 °C for 3 days, during which a crystalline powder was formed. H₄**L4**: 4,4',4",4‴-(1,4-phenylenebis(pyridine-4,2,6-triyl))tetrabenzoic acid H₃**L3**: 4,4',4"-(pyridine-2,4,6-triyl)tribenzoic acid.

With the same procedure it is possible to obtain Fe-**tbb**-MOF-1 and Fe-**tbb**-MOF-2 using **H₃L3-a** and H₃**L3**-**b** respectively instead of H₃**L3**.

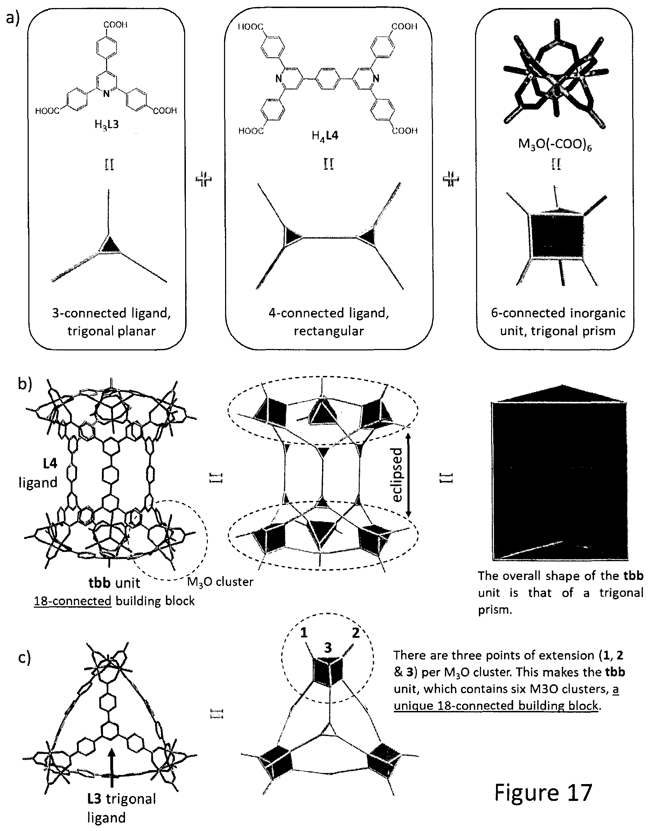

**Figure 17** shows a) individual components suitable for the construction of the novel **tbb** unit b) side view and c) top view, of the **tbb** unit, highlighting key components and their arrangement. Each of the M₃O clusters at the corner of the tbb unit in **Figure** has available three points of extension. This makes the tbb unit, which contains six M₃O clusters a unique 18-connected building block.

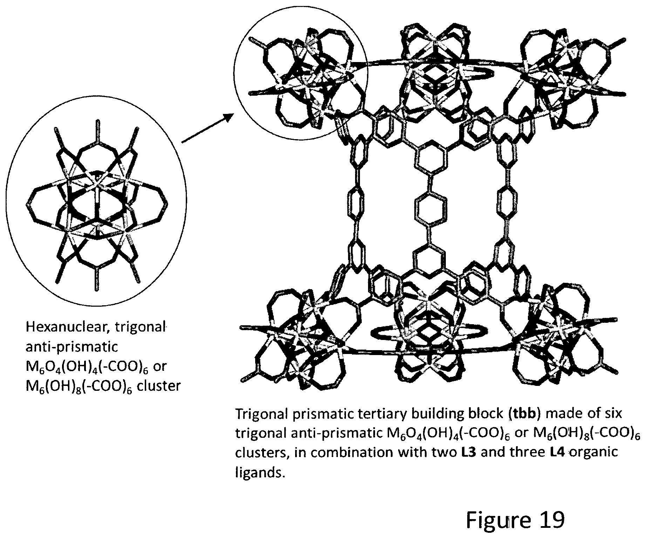

**Figure 19** shows hexanuclear trigonal anti-prismatic **M₆O₄(OH)₄(-COO)₆** or **M₆(OH)₈(-COO)₆** metal clusters, suitable for the construction of novel trigonal prismatic **tbb** units. The trigonal prismatic tertiary building block **(tbb)** of the **Figure** is made of six trigonal anti-prismatic **M₆O₄(OH)₄(-COO)₆** or **M₆(OH)₈(-COO)₆** clusters, in combination with two L3 and three L4 organic ligands.

## Claims

1. Building block for the construction of new, highly porous metal organic frameworks (MOF), comprising
a) two tridentate trigonal-shaped organic ligands, **L3,** each with three carboxylate groups coordinate to the metal clusters
b) three tetradentate, rectangular planar organic ligands, **L4,** each with four carboxylate groups coordinate to the metal clusters and
c) six oxo-centered trimeric carboxylate-based metal clusters, M₃O(-COO)₆, each with six points of extension, where M is a metal
whereby
d) the three points of extension of each metal cluster are occupied by three carboxylate groups provided by one tridentate trigonal-shaped organic ligand, and two tetradentate, rectangular planar organic ligands, and the other three points of extension of each metal cluster are adapted to receive carboxylate groups by other sources of the MOF
e) the six (6) oxo-centered trimeric carboxylate-based metal clusters form two sets of three M₃O(-COO)₆
f) in each set three M₃O(-COO)₆ clusters are connected by one tridentate **L3** ligand
g) the two sets of metal clusters are connected by three tetradentate **L4** ligands in a trigonal prismatic arrangement (eclipsed conformation)
h) the unit has a trigonal prismatic shape in which each of the six corners is occupied by a M₃O(-COO)₆ cluster.

2. Building block **according to claim 1,** whereby the metal M is trivalent with 3+ oxidation state and is one of the following: include aluminum, scandium, titanium, vanadium, chromium, manganese, iron, cobalt, nickel, copper, gallium, germanium, arsenic, yttrium, zirconium, niobium, molybdenum, palladium, silver, indium, tin, antimony, lanthanum, cerium, praseodymium, neodymium, samarium, europium, gadolinium, terbium, dysprosium, holmium, erbium, thulium, ytterbium, lutetium, Hafnium, tantalum, tungsten, rhenium, osmium, iridium, platinum, gold, lead and bismuth, preferably one of aluminum, scandium, iron, gallium and indium.

3. Ligand **L3** in a building block **according to claim 1 or claim 2,** whereby the **L3** is a tricarboxylate ligand from a ligand precursor that has any of the following formulae:
i) **H₃L3,** i.e. 4,4',4"-(pyridine-2,4,6-triyl)tribenzoic acid:
ii) **H₃L3a,** i.e. 5'-(4-carboxyphenyl)-[1,1':3',1"-terphenyl]-4,4"-dicarboxylic acid:
iii) **H₃L3b,** i.e. 4,4',4"-(1,3,5-triazine-2,4,6-triyl)tribenzoic acid:
iv) **H₃L3c,** i.e. 5"-(4'-carboxy-[1,1'-biphenyl]-4-yl)-[1,1':4',1":3",1‴:4‴,1ʺʺ-quinquephenyl]-4,4ʺʺ-dicarboxylic acid:
v) **H₃L3d,** i.e. 4,4',4"-nitrilotribenzoic acid:
vi) **H₃L3e,** i.e. benzene-1,3,5-tricarboxylic acid:

4. Ligand **L4** in a building block **according to one of claims 1 to 3,** whereby the **L4** is a tetracarboxylate ligand from a ligand precursor that has any of the following formulae:
i) **H₄L4,** i.e. 4,4',4",4‴-(1,4-phenylenebis(pyridine-4,2,6-triyl))tetrabenzoic acid:
ii) **H₄L4-1,** i.e. 5',5‴-bis(4-carboxyphenyl)-[1,1':3',1":4",1‴:3‴,1ʺʺ-quinquephenyl]-4,4ʺʺ-dicarboxylic acid:
iii) **H₄L4-2,** i.e. 4,4',4",4‴-(naphthalene-2,6-diylbis(pyridine-4,2,6-triyl))tetrabenzoic acid:
iv) **H₄L4-3,** i.e. 5',5ʺʺ-(naphthalene-2,6-diyl)bis(([1,1':3',1"-terphenyl]-4,4"-dicarboxylic acid)):
v) **H₄L4-4,** i.e. 4,4',4",4‴-(naphthalene-1,4-diylbis(pyridine-4,2,6-triyl))tetrabenzoic acid)):
vi) **H₄L4-5,** i.e. 5',5ʺʺ-(naphthalene-1,4-diyl)bis(([1,1':3',1"-terphenyl]-4,4"-dicarboxylic acid)):
vii) **H₄L4-6,** i.e. 4',4‴,4‴ʺ,4‴ʺʺ-(1,4-phenylenebis(pyridine-4,2,6-triyl))tetrakis(([1,1'-biphenyl]-4-carboxylic acid)):
viii) **H₄L4-7,** i.e. 5",5‴ʺʺ-(1,4-phenylene)bis(([1,1':4',1":3",1‴:4‴,1ʺʺ-quinquephenyl]-4,4ʺʺ-dicarboxylic acid)):
ix) **H₄L4-8,** i.e. 4',4‴,4‴ʺ,4‴ʺʺ-(naphthalene-1,4-diylbis(pyridine-4,2,6-triyl))tetrakis(([1,1'-biphenyl]-4-carboxylic acid)):
x) **H₄L4-9,** i.e. 5",5‴ʺʺ-(naphthalene-1,4-diyl)bis(([1,1':4',1":3",1‴:4‴,1ʺʺ-quinquephenyl]-4,4ʺʺ-dicarboxylic acid)):
xi) **H₄L4-10,** i.e. 4',4‴,4‴ʺ,4‴ʺʺ-(naphthalene-2,6-diylbis(pyridine-4,2,6-triyl))tetrakis(([1,1'-biphenyl]-4-carboxylic acid)):
xii) **H₄L4-11,** i.e. 5",5‴ʺʺ-(naphthalene-2,6-diyl)bis(([1,1':4',1":3",1‴:4‴,1ʺʺ-quinquephenyl]-4,4ʺʺ-dicarboxylic acid)):
xiii) **H₄L4-12,** i.e. 4',4‴,4‴ʺ,4‴ʺʺ-([1,1'-biphenyl]-4,4'-diylbis(pyridine-4,2,6-triyl))tetrakis(([1,1'-biphenyl]-4-carboxylic acid)) **(H₄L4-12):**
xiv) **H₄L4-13,** i.e. 4-[4-[3-[4-[4-[3,5-bis[4-(4-carboxyphenyl)phenyl]phenyl]phenyl]phenyl]-5-[4-(4-carboxyphenyl)phenyl]phenyl]phenyl]benzoic acid **(H₄L4-13):**
xv) **H₄L4-14,** i.e. 4,4',4",4"'-(1,4-phenylenebis(azanetriyl))tetrabenzoic acid **(H₄L4-14):**
vxi) **H₄L4-15,** i.e. is (E)-5,5'-(diazene-1,2-diyl)diisophthalic acid **(H₄L4-15):**
xvii) **H₄L4-16,** i.e. [1,1'-biphenyl]-3,3',5,5'-tetracarboxylic acid **(H₄L4-16):**
xviii) **H₄L4-17,** i.e. is [1,1':4',1"-terphenyl]-3,3",5,5"-tetracarboxylic acid **(H₄L4-17):**

5. Building block **according to claim 1 or claim 2,** including ligands **L3** and **L4** from one of the following combinations of ligand precursors **H₃L3 according to claim 3** and **H₄L4 according to claim 4:**
• **H₃L3/H₄L4, H₃L3/H₄L4-1, H₃L3/H₄L4-2, H₃L3/H₄L4-3, H₃L3/H₄L4-4, H₃L3/H₄L4-5**
• **H₃L3a/H₄L4, H₃L3a/H₄L4-1, H₃L3a/H₄L4-2, H₃L3a/H₄L4-3, H₃L3a/H₄L4-4, H₃L3a/H₄L4-5**
• **H₃L3b/H₄L4, H₃L3b/H₄L4-1, H₃L3b/H₄L4-2, H₃L3b/H₄L4-3, H₃L3b/H₄L4-4, H₃L3b/H₄L4-5**
• **H₃L3c/H₄L4-6, H₃L3c/H₄L4-7, H₃L3c/H₄L4-8, H₃L3c/H₄L4-9, H₃L3c/H₄L4-10, H₃L3c/H₄L4-11, H₃L3c/H₄L4-12, H₃L3c/H₄L4-13**
• **H₃L3d/H₄L4-14**
• **H₃L3e/H₄L4-15, H₃L3e/H₄L4-16, H₃L3e/H₄L4-17**

6. Building block **according to claim 5,** with trigonal anti-prismatic hexanuclear metal clusters **M₆O₄(OH)₄(-COO)₆** , where M: Zr⁴⁺, Hf⁴⁺ or **M₆(OH)₈(-COO)₆,** where M: Y³⁺, La³⁺, Ce³⁺, Pr³⁺, Nd³⁺, Sm³⁺, Eu³⁺/Eu²⁺, Gd³⁺, Tb³⁺, Dy³⁺, Ho³⁺, Er³⁺, Tm³⁺, Yb³⁺, Lu³⁺.

7. A porous metal organic framework (MOF), comprising building blocks **according to claim 1 or claim 2** and further connecting building blocks, whereby each connecting building block comprises
a) six tetradentate, rectangular planar organic ligands, each with four carboxylate groups
b) an associated carboxylate-based metal cluster, M₃O(-COO)₆, each with six points of extension,
whereby one carboxylate group of each-one of said six tetradentate ligands occupy a point of extension of an associated metal cluster and each one of the other three carboxylate groups of the tetradentate ligand occupy a point of extension of metal clusters of a building block **according to claim 1 or claim 2.**

8. Porous metal organic framework (MOF), comprising building blocks **according to claim 1 or claim 2,** whereby the MOF has a framework formula: (M₃O)₇(**L4**)₉(**L3**)₂X₇Y_{z}, with z≥21, where M is a metal provided by a metal salt precursor and X is the anion of the metal salt precursor and Y is a solvent molecule

9. Porous metal organic framework (MOF) **according to claim 8,** whereby ligands **L3** are **according to claim 3** and ligands **L4** are **according to claim 4.**

10. Porous metal organic framework (MOF), comprising building blocks **according to one of claims 1, 2 or 6,** whereby the MOF, excluding potential coordinating solvent molecules, has one of the following framework formulae:
• (M₃O)₆(**L4**)₃(**L3**)₂(**L5**)₉X₆
• [M₆O₄(OH)₄T₆]₆(**L3**)₂(**L4**)₃(**L5**)₉
• [M₆(OH)₈T₆]₆(**L3**)₂(**L4**)₃(**L5**)₉X₁₂
where
• **L5** is a bend ligand
• T is OH- or non-bridging carboxylate-based organic ligand
• M is a metal provided by a metal salt precursor and X is a monovalent (-1 charge) anion of the metal salt precursor

11. Ligand **L5** in a porous metal organic framework (MOF) **according to claim 9,** whereby the **L5** is a bidentate ligand, preferably a bend dicarboxylate ligand from a ligand precursor that has any of the following formulae:
i) **H₂L5-1,** i.e. 2,2"-dimethyl-[1,1':3',1"-terphenyl]-4,4"-dicarboxylic acid
ii) **H₂L5-2,** i.e. 2,2",6,6"-tetramethyl-[1,1':3',1"-terphenyl]-4,4"-dicarboxylic acid
iii) **H₂L5-3,** i.e. a 4,4'-sulfonyldibenzoic acid
iv) **H₂L5-4,** i.e. 4,4'-Methylenedibenzoic acid **(H₂L5-4)**
v) is 4,4'-(difluoromethylene)dibenzoic acid **(H₂L5-5)**

12. A porous metal organic framework (MOF), comprising building blocks **according to claim 10,** including ligands **L3, L4** and **L5** from one of the following combinations of ligand precursors **H₃L3 according to claim 3, H₄L4 according to claim 4** and **H₂L5 according to claim 11:**
• **H₃L3/H₄L4/H₂L5-1, H₃L3/H₄L4-1/H₂L5-1, H₃L3/H₄L4-2/H₂L5-1, H₃L3/H₄L4-3/H₂L5-1, H₃L3/H₄L4-4/H₂L5-1, H₃L3/H₄L4-5/H₂L5-1**
• **H₃L3/H₄L4/H₂L5-2, H₃L3/H₄L4-1/H₂L5-2, H₃L3/H₄L4-2/H₂L5-2, H₃L3/H₄L4-3/H₂L5-2, H₃L3/H₄L4-4/H₂L5-2, H₃L3/H₄L4-5/H₂L5-2**
• **H₃L3/H₄L4/H₂L5-3, H₃L3/H₄L4-1/H₂L5-3, H₃L3/H₄L4-2/H₂L5-3, H₃L3/H₄L4-3/H₂L5-3, H₃L3/H₄L4-4/H₂L5-3, H₃L3/H₄L4-5/H₂L5-3**
• **H₃L3/H₄L4/H₂L5-4, H₃L3/H₄L4-1/H₂L5-4, H₃L3/H₄L4-2/H₂L5-4, H₃L3/H₄L4-3/H₂L5-4, H₃L3/H₄L4-4/H₂L5-4, H₃L3/H₄L4-5/H₂L5-4**
• **H₃L3/H₄L4/H₂L5-5, H₃L3/H₄L4-1/H₂L5-5, H₃L3/H₄L4-2/H₂L5-5, H₃L3/H₄L4-3/H₂L5-5, H₃L3/H₄L4-4/H₂L5-5, H₃L3/H₄L4-5/H₂L5-5**
• **H₃L3a/H₄L4/H₂L5-1, H₃L3a/H₄L4-1/H₂L5-1, H₃L3a/H₄L4-2/H₂L5-1, H₃L3a/H₄L4-3/H₂L5-1, H₃L3a/H₄L4-4/H₂L5-1, H₃L3a/H₄L4-5/H₂L5-1**
• **H₃L3a/H₄L4/H₂L5-2, H₃L3a/H₄L4-1/H₂L5-2, H₃L3a/H₄L4-2/H₂L5-2, H₃L3a/H₄L4-3/H₂L5-2, H₃L3a/H₄L4-4/H₂L5-2, H₃L3a/H₄L4-5/H₂L5-2**
• **H₃L3a/H₄L4/H₂L5-3, H₃L3a/H₄L4-1/H₂L5-3, H₃L3a/H₄L4-2/H₂L5-3, H₃L3a/H₄L4-3/H₂L5-3, H₃L3a/H₄L4-4/H₂L5-3, H₃L3a/H₄L4-5/H₂L5-3**
• **H₃L3a/H₄L4/H₃L5-4, H₃L3a/H₄L4-1/H₂L5-4, H₃L3a/H₄L4-2/H₂L5-4, H₃L3a/H₄L4-3/H₂L5-4, H₃L3a/H₄L4-4/H₂L5-4, H₃L3a/H₄L4-5/H₂L5-4**
• **H₃L3a/H₄L4/H₂L5-5, H₃L3a/H₄L4-1/H₂L5-5, H₃L3a/H₄L4-2/H₂L5-5, H₃L3a/H₄L4-3/H₂L5-5, H₃L3a/H₄L4-4/H₂L5-5, H₃L3a/H₄L4-5/H₂L5-5**
• **H₃L3b/H₄L4/H₂L5-1, H₃L3b/H₄L4-1/H₂L5-1, H₃L3b/H₄L4-2/H₂L5-1, H₃L3b/H₄L4-3/H₂L5-1, H₃L3b/H₄L4-4/H₂L5-1, H₃L3b/H₄L4-5/H₂L5-1**
• **H₃L3b/H₄L4/H₂L5-2, H₃L3b/H₄L4-1/H₂L5-2, H₃L3b/H₄L4-2/H₂L5-2, H₃L3b/H₄L4-3/H₂L5-2, H₃L3b/H₄L4-4/H₂L5-2, H₃L3b/H₄L4-5/H₂L5-2**
• **H₃L3b/H₄L4/H₂L5-3, H₃L3b/H₄L4-1/H₂L5-3, H₃L3b/H₄L4-2/H₃L5-3, H₃L3b/H₄L4-3/H₂L5-3, H₃L3b/H₄L4-4/H₂L5-3, H₃L3b/H₄L4-5/H₂L5-3**
• **H₃L3b/H₄L4/H₂L5-4, H₃L3b/H₄L4-1/H₂L5-4, H₃L3b/H₄L4-2/H₂L5-4, H₃L3b/H₄L4-3/H₂L5-4, H₃L3b/H₄L4-4/H₂L5-4, H₃L3b/H₄L4-5/H₂L5-4**
• **H₃L3b/H₄L4/H₂L5-5, H₃L3b/H₄L4-1/H₂L5-5, H₃L3b/H₄L4-2/H₂L5-5, H₃L3b/H₄L4-3/H₂L5-5, H₃L3b/H₄L4-4/H₂L5-5, H₃L3b/H₄L4-5/H₂L5-5**
• **H₃L3c/H₄L4-6/H₃L5-1, H₃L3c/H₄L4-7/H₂L5-1, H₃L3c/H₄L4-8/H₂L5-1, H₃L3c/H₄L4-9/H₂L5-1, H₃L3c/H₄L4-10/H₂L5-1, H₃L3c/H₄L4-11/H₂L5-1, H₃L3c/H₄L4-12/H₂L5-1, H₃L3c/H₄L4-13/H₂L5-1**
• **H₃L3c/H₄L4-6/H₂L5-2, H₃L3c/H₄L4-7/H₂L5-2, H₃L3c/H₄L4-8/H₂L5-2, H₃L3c/H₄L4-9/H₂L5-2, H₃L3c/H₄L4-10/H₂L5-2, H₃L3c/H₄L4-11/H₂L5-2, H₃L3c/H₄L4-12/H₂L5-2, H₃L3c/H₄L4-13/H₂L5-2**
• **H₃L3c/H₄L4-6/H₂L5-3, H₃L3c/H₄L4-7/H₂L5-3, H₃L3c/H₄L4-8/H₂L5-3, H₃L3c/H₄L4-9/H₂L5-3, H₃L3c/H₄L4-10/H₂L5-3, H₃L3c/H₄L4-11/H₂L5-3, H₃L3c/H₄L4-12/H₂L5-3, H₃L3C/H₄L4-13/H₂L5-3**
• **H₃L3c/H₄L4-6/H₂L5-4, H₃L3c/H₄L4-7/H₂L5-4, H₃L3c/H₄L4-8/H₂L5-4, H₃L3c/H₄L4-9/H₂L5-4, H₃L3c/H₄L4-10/H₂L5-4, H₃L3c/H₄L4-11/H₂L5-4, H₃L3c/H₄L4-12/H₂L5-4, H₃L3c/H₄L4-13/H₂L5-4**
• **H₃L3C/H₄L4-6/H₂L5-5, H₃L3c/H₄L4-7/H₂L5-5, H₃L3c/H₄L4-8/H₂L5-5, H₃L3c/H₄L4-9/H₂L5-5, H₃L3c/H₄L4-10/H₂L5-5, H₃L3c/H₄L4-11/H₂L5-5, H₃L3c/H₄L4-12/H₂L5-5, H₃L3c/H₄L4-13/H₂L5-5**
• **H₃L3d/H₄L4-14/H₂L5-1, H₃L3d/H₄L4-14/H₂L5-2, H₃L3d/H₄L4-14/H₂L5-3, H₃L3d/H₄L4-14/H₂L5-4, H₃L3d/H₄L4-14/H₂L5-5,**
• **H₃L3e/H₄L4-15/H₂L5-1, H₃L3e/H₄L4-15/H₂L5-2, H₃L3e/H₄L4-15/H₂L5-3, H₃L3e/H₄L4-15/H₂L5-4, H₃L3e/H₄L4-15/H₂L5-5**
• **H₃L3e/H₄L4-16/H₂L5-1, H₃L3e/H₄L4-16/H₂L5-2, H₃L3e/H₄L4-16/H₃L5-3, H₃L3e/H₄L4-16/H₂L5-4, H₃L3e/H₄L4-16/H₂L5-5**
• **H₃L3e/H₄L4-17/H₂L5-1, H₃L3e/H₄L4-17/H₂L5-2, H₃L3e/H₄L4-17/H₂L5-3, H₃L3e/H₄L4-17/H₂L5-4, H₃L3e/H₄L4-17/H₂L5-5**

13. Method of production of *porous metal organic framework* including,
e) providing the following precursors :
• a cation metal salt *of a trivalent metal (3+ oxidation state)* within a range 20-80% of molar percentage
• a protonated tridentate, carboxylate-based trigonal-shaped organic ligand (H₃**L3**) within a range 1-50% of molar percentage
• a protonated tetradentate, carboxylate-based rectangular planar organic ligand (H₄**L4**) within a range of 1-50% of molar percentage
f) dissolving the precursors in a solvent to obtain a mixture
g) heating the mixture at a temperature that is equal or higher than 60 °C
h) obtaining the metal organic framework in microcrystalline powder form or as single crystals or a mixture of them.

14. Method **according to claim 13,** including adding to the mixture modulators, preferably acetic acid and/or benzoic acid and/or formic acid, to promote crystallinity.

15. Method **according to claim 13 or claim 14,** whereby the metal salt is trivalent with 3+ oxidation state and incudes at least one of the following: aluminum, scandium, titanium, vanadium, chromium, manganese, iron, cobalt, nickel, copper, gallium, germanium, arsenic, yttrium, zirconium, niobium, molybdenum, palladium, silver, indium, tin, antimony, lanthanum, cerium, praseodymium, neodymium, samarium, europium, gadolinium, terbium, dysprosium, holmium, erbium, thulium, ytterbium, lutetium, hafnium, tantalum, tungsten, rhenium, osmium, iridium, platinum, gold, lead and bismuth, preferably one of aluminum, scandium, iron, gallium and indium.

16. Method **according to any one of claims 13 to 16,** whereby the solvent is an amide-based solvent such as N,N-Dimethyformamide (DMF) or N,N-Diethyformamide (DEF) to obtain a mixture.

17. Method **according to any one of claims 13 to 17,** whereby heating the mixture is effected at a temperature less than or equal with 180 °C, preferably about 135 °C.

18. Method **according to anyone of claims 13 to 18,** whereby protonated tridentate carboxylate-based trigonal-shaped organic ligand (H₃L3) has any of the following formulae:
i) **H₃L3,** i.e. 4,4',4"-(pyridine-2,4,6-triyl)tribenzoic acid
ii) H₃L3a, i.e. 5'-(4-carboxyphenyl)-[1,1':3',1"-terphenyl]-4,4"-dicarboxylic acid
iii) H₃L3b, i.e. 4,4',4"-(1,3,5-triazine-2,4,6-triyl)tribenzoic acid
iv) **H₃L3c,** i.e. 5"-(4'-carboxy-[1,1'-biphenyl]-4-yl)-[1,1':4',1":3",1‴:4‴,1ʺʺ-quinquephenyl]-4,4ʺʺ-dicarboxylic acid.
v) **H₃L3d,** i.e. 4,4',4"-nitrilotribenzoic acid
vi) **H₃L3e,** i.e. benzene-1,3,5-tricarboxylic acid.

19. Method **according to one of claims 12 to 18,** whereby the protonated tetradentate, carboxylate-based rectangular planar organic ligand (H₄L4) has any of the following formulae:
i) **H₄L4,** i.e. 4,4',4",4‴-(1,4-phenylenebis(pyridine-4,2,6-triyl))tetrabenzoic acid
ii) **H₄L4-1,** i.e. 5',5‴-bis(4-carboxyphenyl)-[1,1':3',1":4",1‴:3‴,1ʺʺ-quinquephenyl]-4,4ʺʺ-dicarboxylic acid
iii) **H₄L4-2,** i.e. 4,4',4",4‴-(naphthalene-2,6-diylbis(pyridine-4,2,6-triyl))tetrabenzoic acid
iv) **H₄L4-3,** i.e. 5',5ʺʺ-(naphthalene-2,6-diyl)bis(([1,1':3',1"-terphenyl]-4,4"-dicarboxylic acid))
v) **H₄L4-4,** i.e. 4,4',4",4‴-(naphthalene-1,4-diylbis(pyridine-4,2,6-triyl))tetrabenzoic acid))
vi) **H₄L4-5,** i.e. 5',5ʺʺ-(naphthalene-1,4-diyl)bis(([1,1':3',1"-terphenyl]-4,4"-dicarboxylic acid))
vii) **H₄L4-6,** i.e. 4',4‴,4‴ʺ,4‴ʺʺ-(1,4-phenylenebis(pyridine-4,2,6-triyl))tetrakis(([1,1'-biphenyl]-4-carboxylic acid))
viii) **H₄L4-7,** i.e. 5",5‴ʺʺ-(1,4-phenylene)bis(([1,1':4',1":3",1‴:4‴,1ʺʺ-quinquephenyl]-4,4ʺʺ-dicarboxylic acid))
ix) **H₄L4-8,** i.e. 4',4‴,4‴ʺ,4‴ʺʺ-(naphthalene-1,4-diylbis(pyridine-4,2,6-triyl))tetrakis(([1,1'-biphenyl]-4-carboxylic acid))
x) **H₄L4-9,** i.e. 5",5‴ʺʺ-(naphthalene-1,4-diyl)bis(([1,1':4',1":3",1‴:4‴,1ʺʺ-quinquephenyl]-4,4ʺʺ-dicarboxylic acid))
xi) **H₄L4-10,** i.e. 4',4‴,4‴ʺ,4‴ʺʺ-( naphthalene-2,6-diylbis(pyridine-4,2,6-triyl))tetrakis(([1,1'-biphenyl]-4-carboxylic acid))
xii) **H₄L4-11,** i.e. 5",5‴ʺʺ-(naphthalene-2,6-diyl)bis(([1,1':4',1":3",1‴:4‴,1ʺʺ-quinquephenyl]-4,4""-dicarboxylic acid))
xiii) **H₄L4-12,** i.e. 4',4‴,4‴ʺ,4‴ʺʺ-([1,1'-biphenyl]-4,4'-diylbis(pyridine-4,2,6-triyl))tetrakis(([1,1'-biphenyl]-4-carboxylic acid)) **(H₄L4-12)**
xiv) **H₄L4-13,** i.e. 4-[4-[3-[4-[4-[3,5-bis[4-(4-carboxyphenyl)phenyl]phenyl]phenyl]phenyl]-5-[4-(4-carboxyphenyl)phenyl]phenyl]phenyl]benzoic acid **(H₄L4-13)**
xv) **H₄L4-14,** i.e. 4,4',4",4"'-(1,4-phenylenebis(azanetriyl))tetrabenzoic acid **(H₄L4-14)**
vxi) **H₄L4-15,** i.e. is (E)-5,5'-(diazene-1,2-diyl)diisophthalic acid **(H₄L4-15)**
xvii) **H₄L4-16,** i.e. [1,1'-biphenyl]-3,3',5,5'-tetracarboxylic acid **(H₄L4-16)**
xviii) **H₄L4-17,** i.e. is [1,1':4',1"-terphenyl]-3,3'',5,5"-tetracarboxylic acid **(H₄L4-17).**

20. Method **according any one of claims 13 to 17,** whereby the precursors include one of the following combinations of a ligand precursor **H₃L3 according to claim 18** and a ligand precursor **H₄L4 according to claim 19:**
• **H₃L3/H₄L4, H₃L3/H₄L4-1, H₃L3/H₄L4-2, H₃L3/H₄L4-3, H₃L3/H₄L4-4, H₃L3/H₄L4-5**
• **H₃L3a/H₄L4, H₃L3a/H₄L4-1, H₃L3a/H₄L4-2, H₃L3a/H₄L4-3, H₃L3a/H₄L4-4, H₃L3a/H₄L4-5**
• **H₃L3b/H₄L4, H₃L3b/H₄L4-1, H₃L3b/H₄L4-2, H₃L3b/H₄L4-3, H₃L3b/H₄L4-4, H₃L3b/H₄L4-5**
• **H₃L3c/H₄L4-6, H₃L3c/H₄L4-7, H₃L3c/H₄L4-8, H₃L3c/H₄L4-9, H₃L3c/H₄L4-10, H₃L3c/H₄L4-11, H₃L3c/H₄L4-12, H₃L3c/H₄L4-13**
• **H₃L3d/H₄L4-14**
• **H₃L3e/H₄L4-15, H₃L3e/H₄L4-16, H₃L3e/H₄L4-17.**

21. Method **according to any one of claims 13 to 20,** including obtaining a porous metal organic framework **according to any one of claims 7 to 10.**

22. Method **according to claim 20 or claim 21,** including obtaining a porous metal organic framework with trigonal anti-prismatic hexanuclear metal clusters with a formula **M₆O₄(OH)₄(-COO)₆,** where M: Zr⁴⁺, Hf⁴⁺ or **M₆(OH)₈(-COO)₆,** where M: Y³⁺, La³⁺, Ce³⁺, Pr³⁺, Nd³⁺, Sm³⁺, Eu³⁺/Eu²⁺, Gd³⁺, Tb³⁺, Dy³⁺, Ho³⁺, Er³⁺, Tm³⁺, Yb³⁺, Lu³⁺.

23. Method of production of porous metal organic framework, including
e) providing the following precursors:
• a cation metal salt of a trivalent metal (3+ oxidation state) within a range 20-80% of molar percentage
• a protonated tridentate, carboxylate-based trigonal-shaped organic ligand **(H₃L3)** within a range 1-50% of molar percentage
• a protonated tetradentate, carboxylate-based rectangular planar organic ligand **(H₄L4)** within a range of 1-50% of molar percentage
• a protonated bend organic ligand (H₂L5) within a range of 1-50% of molar percentage
f) dissolving the precursors in a solvent to obtain a mixture
g) heating the mixture at a temperature that is equal or higher than 60 °C
h) obtaining the metal organic framework in microcrystalline powder form or as single crystals or a mixture of them

24. Method **according to claim 23,** including adding to the mixture modulators, preferably acetic acid and/or benzoic acid and/or formic acid, to promote crystallinity.

25. Method **according to claim 23 or claim 24,** whereby the solvent is an amide-based solvent such as N,N-Dimethyformamide (DMF) or N,N-Diethyformamide (DEF).

26. Method **according to any one of claims 23 to 25,** whereby heating the mixture is effected at a temperature less than or equal with 180 °C.

27. Method **according to anyone of claims 23 to 26,** whereby the protonated tetradentate, carboxylate-based rectangular planar organic ligand **(H₂L5)** has any of the following formulae:
i) **H₂L5-1,** i.e. 2,2"-dimethyl-[1,1':3',1"-terphenyl]-4,4"-dicarboxylic acid
ii) **H₂L5-2,** i.e. 2,2",6,6"-tetramethyl-[1,1':3',1"-terphenyl]-4,4"-dicarboxylic acid
iii) **H₂L5-3,** i.e. a 4,4'-sulfonyldibenzoic acid
iv) **H₂L5-4,** i.e. 4,4'-Methylenedibenzoic acid **(H₂L5-4)**
vi) **H₂L5-5 is** 4,4'-(difluoromethylene)dibenzoic acid.

28. Method **according to anyone of claims 23 to 26,** whereby the precursors include one of the following combinations of a ligand precursor **H₃L3 according to claim 18,** a ligand precursor **H₄L4 according to claim 19** and a ligand precursor **H₂L5 according to claim 27:**
• **H₃L3/H₄L4/H₂L5-1, H₃L3/H₄L4-1/H₂L5-1, H₃L3/H₄L4-2/H₂L5-1, H₃L3/H₄L4-3/H₂L5-1, H₃L3/H₄L4-4/H₂L5-1, H₃L3/H₄L4-5/H₂L5-1**
• **H₃L3/H₄L4/H₂L5-2, H₃L3/H₄L4-1/H₂L5-2, H₃L3/H₄L4-2/H₂L5-2, H₃L3/H₄L4-3/H₂L5-2, H₃L3/H₄L4-4/H₂L5-2, H₃L3/H₄L4-5/H₂L5-2**
• **H₃L3/H₄L4/H₂L5-3, H₃L3/H₄L4-1/H₂L5-3, H₃L3/H₄L4-2/H₂L5-3, H₃L3/H₄L4-3/H₂L5-3, H₃L3/H₄L4-4/H₂L5-3, H₃L3/H₄L4-5/H₂L5-3**
• **H₃L3/H₄L4/H₂L5-4, H₃L3/H₄L4-1/H₂L5-4, H₃L3/H₄L4-2/H₂L5-4, H₃L3/H₄L4-3/H₂L5-4, H₃L3/H₄L4-4/H₂L5-4, H₃L3/H₄L4-5/H₂L5-4**
• **H₃L3/H₄L4/H₂L5-5, H₃L3/H₄L4-1/H₂L5-5, H₃L3/H₄L4-2/H₂L5-5, H₃L3/H₄L4-3/H₂L5-5, H₃L3/H₄L4-4/H₂L5-5, H₃L3/H₄L4-5/H₂L5-5**
• **H₃L3a/H₄L4/H₂L5-1, H₃L3a/H₄L4-1/H₂L5-1, H₃L3a/H₄L4-2/H₂L5-1, H₃L3a/H₄L4-3/H₂L5-1, H₃L3a/H₄L4-4/H₂L5-1, H₃L3a/H₄L4-5/H₂L5-1**
• **H₃L3a/H₄L4/H₂L5-2, H₃L3a/H₄L4-1/H₂L5-2, H₃L3a/H₄L4-2/H₂L5-2, H₃L3a/H₄L4-3/H₂L5-2, H₃L3a/H₄L4-4/H₂L5-2, H₃L3a/H₄L4-5/H₂L5-2**
• **H₃L3a/H₄L4/H₂L5-3, H₃L3a/H₄L4-1/H₂L5-3, H₃L3a/H₄L4-2/H₂L5-3, H₃L3a/H₄L4-3/H₂L5-3, H₃L3a/H₄L4-4/H₂L5-3, H₃L3a/H₄L4-5/H₂L5-3**
• **H₃L3a/H₄L4/H₂L5-4, H₃L3a/H₄L4-1/H₂L5-4, H₃L3a/H₄L4-2/H₂L5-4, H₃L3a/H₄L4-3/H₂L5-4, H₃L3a/H₄L4-4/H₂L5-4, H₃L3a/H₄L4-5/H₂L5-4**
• **H₃L3a/H₄L4/H₂L5-5, H₃L3a/H₄L4-1/H₂L5-5, H₃L3a/H₄L4-2/H₂L5-5, H₃L3a/H₄L4-3/H₂L5-5, H₃L3a/H₄L4-4/H₂L5-5, H₃L3a/H₄L4-5/H₂L5-5**
• **H₃L3b/H₄L4/H₂L5-1, H₃L3b/H₄L4-1/H₂L5-1, H₃L3b/H₄L4-2/H₂L5-1, H₃L3b/H₄L4-3/H₂L5-1, H₃L3b/H₄L4-4/H₂L5-1, H₃L3b/H₄L4-5/H₂L5-1**
• **H₃L3b/H₄L4/H₂L5-2, H₃L3b/H₄L4-1/H₂L5-2, H₃L3b/H₄L4-2/H₂L5-2, H₃L3b/H₄L4-3/H₂L5-2, H₃L3b/H₄L4-4/H₂L5-2, H₃L3b/H₄L4-5/H₂L5-2**
• **H₃L3b/H₄L4/H₂L5-3, H₃L3b/H₄L4-1/H₂L5-3, H₃L3b/H₄L4-2/H₂L5-3, H₃L3b/H₄L4-3/H₂L5-3, H₃L3b/H₄L4-4/H₂L5-3, H₃L3b/H₄L4-5/H₂L5-3**
• **H₃L3b/H₄L4/H₂L5-4, H₃L3b/H₄L4-1/H₂L5-4, H₃L3b/H₄L4-2/H₂L5-4, H₃L3b/H₄L4-3/H₂L5-4, H₃L3b/H₄L4-4/H₂L5-4, H₃L3b/H₄L4-5/H₂L5-4**
• **H₃L3b/H₄L4/H₂L5-5, H₃L3b/H₄L4-1/H₂L5-5, H₃L3b/H₄L4-2/H₂L5-5, H₃L3b/H₄L4-3/H₂L5-5, H₃L3b/H₄L4-4/H₂L5-5, H₃L3b/H₄L4-5/H₂L5-5**
• **H₃L3c/H₄L4-6/H₂L5-1, H₃L3c/H₄L4-7/H₂L5-1, H₃L3c/H₄L4-8/H₂L5-1, H₃L3c/H₄L4-9/H₂L5-1, H₃L3c/H₄L4-10/H₂L5-1, H₃L3C/H₄L4-11/H₂L5-1, H₃L3c/H₄L4-12/H₂L5-1, H₃L3c/H₄L4-13/H₂L5-1**
• **H₃L3c/H₄L4-6/H₂L5-2, H₃L3c/H₄L4-7/H₂L5-2, H₃L3c/H₄L4-8/H₂L5-2, H₃L3c/H₄L4-9/H₂L5-2, H₃L3c/H₄L4-10/H₂L5-2, H₃L3c/H₄L4-11/H₂L5-2, H₃L3c/H₄L4-12/H₂L5-2, H₃L3c/H₄L4-13/H₂L5-2**
• **H₃L3c/H₄L4-6/H₂L5-3, H₃L3c/H₄L4-7/H₂L5-3, H₃L3c/H₄L4-8/H₂L5-3, H₃L3c/H₄L4-9/H₂L5-3, H₃L3c/H₄L4-10/H₂L5-3, H₃L3c/H₄L4-11/H₂L5-3, H₃L3c/H₄L4-12/H₂L5-3, H₃L3c/H₄L4-13/H₂L5-3**
• **H₃L3c/H₄L4-6/H₂L5-4, H₃L3c/H₄L4-7/H₂L5-4, H₃L3c/H₄L4-8/H₂L5-4, H₃L3c/H₄L4-9/H₂L5-4, H₃L3c/H₄L4-10/H₂L5-4, H₃L3c/H₄L4-11/H₂L5-4, H₃L3c/H₄L4-12/H₂L5-4, H₃L3C/H₄L4-13/H₂L5-4**
• **H₃L3c/H₄L4-6/H₂L5-5, H₃L3c/H₄L4-7/H₂L5-5, H₃L3c/H₄L4-8/H₂L5-5, H₃L3c/H₄L4-9/H₂L5-5, H₃L3c/H₄L4-10/H₂L5-5, H₃L3c/H₄L4-11/H₂L5-S, H₃L3c/H₄L4-12/H₂L5-5, H₃L3c/H₄L4-13/H₂L5-5**
• **H₃L3d/H₄L4-14/H₂L5-1, H₃L3d/H₄L4-14/H₂L5-2, H₃L3d/H₄L4-14/H₂L5-3, H₃L3d/H₄L4-14/H₂L5-4, H₃L3d/H₄L4-14/H₂L5-5,**
• **H₃L3e/H₄L4-15/H₂L5-1, H₃L3e/H₄L4-15/H₂L5-2, H₃L3e/H₄L4-15/H₂L5-3, H₃L3e/H₄L4-15/H₂L5-4, H₃L3e/H₄L4-15/H₂L5-5**
• **H₃L3e/H₄L4-16/H₂L5-1, H₃L3e/H₄L4-16/H₂L5-2, H₃L3e/H₄L4-16/H₂L5-3, H₃L3e/H₄L4-16/H₂L5-4, H₃L3e/H₄L4-16/H₂L5-5**
• H₃L3e/H₄L4-17/H₂L5-1, H₃L3e/H₄L4-17/H₂L5-2, H₃L3e/H₄L4-17/H₂L5-3, H₃L3e/H₄L4-17/H₂LS-4, H₃L3e/H₄L4-17/H₂L5-5

29. Method according to any one of claims 23 to 28, including obtaining a porous metal organic framework according to claim 10.
